(19) Europäisches Patentamt
European Patent Office
Office européen des brevets

(11) EP 4 212 574 A1

(12) **EUROPEAN PATENT APPLICATION**
published in accordance with Art. 153(4) EPC

(43) Date of publication:
**19.07.2023 Bulletin 2023/29**

(21) Application number: **21866808.5**

(22) Date of filing: **08.09.2021**

(51) International Patent Classification (IPC):
***C08G 73/10*** *(2006.01)* ***C08G 18/65*** *(2006.01)*

(52) Cooperative Patent Classification (CPC):
**C08G 18/65; C08G 73/10**

(86) International application number:
**PCT/JP2021/033063**

(87) International publication number:
**WO 2022/054850 (17.03.2022 Gazette 2022/11)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **09.09.2020 JP 2020151667**

(71) Applicant: **KJ Chemicals Corporation**
**Tokyo 103-0023 (JP)**

(72) Inventors:
- **HIRATA, Meiri**
  **Tokyo 103-0023 (JP)**
- **MASUDA, Hideki**
  **Yatsushiro-shi Kumamoto 866-0081 (JP)**

(74) Representative: **ABG Intellectual Property Law, S.L.**
**Avenida de Burgos, 16D**
**Edificio Euromor**
**28036 Madrid (ES)**

(54) **SOLVENT FOR RESIN SYNTHESIS AND METHOD FOR PRODUCING SYNTHETIC RESIN USING SAID SOLVENT**

(57) To provide: a solvent used for synthesizing a synthetic resin such as a polyimide resin and a polyurethane resin, the solvent capable of synthesizing a polymer having a high molecular weight in a short time, causing no clouding of a reaction solution during and after reaction, and having high transparency and storage stability; and a method for producing the synthetic resin using the solvent. A solvent (C) for resin synthesis, containing: 10 to 99.9999 mass% of an amide-based solvent (A); and 0.0001 to 5 mass% of a reaction accelerator (B), in which the reaction accelerator (B) is an aliphatic or aromatic tertiary amine compound having one or more tertiary amino groups in a molecule of the reaction accelerator (B).

EP 4 212 574 A1

## Description

TECHNICAL FIELD

The present invention relates to a solvent for synthesizing a synthetic resin such as a polyimide resin, a polyamide-imide resin, or a polyurethane resin, and a method for producing the synthetic resin using the solvent.

BACKGROUND ART

A group of polyimides (polyimide, polyamide-imide, polyesterimide, polyetherimide, and the like) has not only a strong molecular structure and excellent heat resistance but also mechanical properties and chemical properties that other resins do not have, and is widely used as a high-performance plastic in various fields such as a film, a coating agent, a protective film, an electrical insulating material in general, a bearing, a heat-resistant paint, a heat insulating shaft, a heat insulating tray, an electronic component, and an automobile component. In particular, since an aromatic polyimide is synthesized by an aromatic diamine and an aromatic tetracarboxylic dianhydride, and has a strong molecular structure and a strong intermolecular force, it is widely known as a super engineering plastic having the highest level of thermal, mechanical, and chemical properties among synthetic resins. Polyimides are generally infusible and insoluble, and therefore are synthesized by reacting a diamine or a diisocyanate with an acid dianhydride in an organic solvent at a low temperature of about room temperature to synthesize a polyamic acid as a precursor, and processing a solution of the obtained precursor into a film or the like, and then subjecting the film or the like to dehydration cyclization (imidization) by heating or chemical reaction. Further, when a polyimide soluble in an organic solvent, a thermoplastic polyimide, or the like is synthesized, imidization can be performed by synthesizing a polyimide precursor and then heating the polyimide precursor in the same solvent. In various polyimides, in order to obtain high-performance products, it is necessary to stably synthesize a precursor solution (varnish) having a high molecular weight and to obtain a precursor solution having excellent storage stability (solution stability), and studies on synthesis of precursors have also attracted attention.

Although the kind of an appropriate solvent (a good solvent) varies depending on the chemical structure of the polyimide, an organic polar solvent such as an amide-based solvent is generally used for synthesis of the polyimide precursor. The amide-based solvent is known to have excellent solubility, a high boiling point, and a flash point, and to be thermally and chemically stable, but N-methyl-2-pyrrolidone (NMP), dimethylformamide (DMF), and dimethylacetamide (DMAC), which are often used for synthesis of polyimide precursors, are, for example, apt to generate inflammation when they come into contact with the skin or eyes, and are suspected of having carcinogenicity or teratogenicity, and thus have a problem of harmfulness to the human body, and particularly in NMP, there is also a problem in terms of environment, toxicology, and/or administration (REACH) (PATENT LITERATURES 1 and 2).

In order to solve problems such as low safety of amide-based solvents such as NMP and DMF, N-butyl -2-pyrrolidone (NBP) and 3-methoxy-N, N-dimethylpropanamide (KJCMPA (registered trademark)) have recently attracted attention as solvents for synthesizing a group of polyimides such as polyimide precursors as amide-based solvents having high safety and high solubility (PATENT LITERATURES 3 and 4). However, since the purpose of these prior arts is to use NBP or KJCMPA as a simple alternative solvent for NMP, it is only necessary to exhibit an effect such as a solubility comparable to that of conventional NMP, and they do not solve various problems of conventional NMP, for example, problems that the molecular weight of the polyimide precursor is difficult to be increased, solution stability of the polyimide precursor is low (it is easy to be cloudy), whitening is likely to occur during polyimide film formation, and surface unevenness is likely to occur. On the other hand, in order to solve the problem of whitening during polyimide film formation and the problem of occurrence of surface unevenness, it has been reported that KJCMPA or 3-butoxy-N, N-dimethylpropanamide (KJCBPA (registered trademark)) is used (PATENT LITERATURES 5 to 7), but it has been necessary to use a non-polar organic solvent, an alcohol, or water in mixture together with these solvents. However, introduction of a large amount of alcohol or water having active hydrogen causes a side reaction such as a hydrolysis reaction of an acid dianhydride or hydrolysis of polyamic acid that is a generated precursor, and as a result, cloudiness of polyimide precursor solution cannot be avoided, and problems such as inability to achieve a high molecular weight of the polyimide precursor tend to occur conversely.

Further, polyurethane is a plastic material, but is soft like rubber and excellent in tensile strength, abrasion resistance, elasticity, and oil resistance, and is used in various industrial products ranging from daily necessities such as shoe soles of sports shoes, and clothing, to industrial materials such as soundproofing materials, heat insulating materials, and adhesives, and automobile materials such as bumpers and headrests. There are various methods for synthesizing polyurethane depending on the structure and application thereof, but since urethanization reaction involves an exothermic reaction, many thermoplastic polyurethanes are stably synthesized by a solution polymerization method. In particular, for increasing the molecular weight, DMF or the like is often used as a polar solvent capable of uniformly dissolving the polyurethane to be produced. However, as described above, there is still a concern about a safety problem caused by DMF.

As described above, there has not yet been known a solvent suitably used for synthesizing a polyamic acid such as a polyimide precursor or a polyamide-imide precursor, polyimide, polyamide-imide, polyurethane, or the like, the solvent being capable of efficiently and stably synthesizing a polymer having a high molecular weight, causing no clouding of a reaction solution during and after reaction, having high transparency and storage stability, and being capable of obtaining a synthetic resin excellent in adhesion to a substrate.

CITATION LIST

PATENT LITERATURE

PATENT LITERATURE 1: JP-A-2016-194025

PATENT LITERATURE 2: JP-A-2013-023583

PATENT LITERATURE 3: JP-T-2017-517582

PATENT LITERATURE 4: JP-T-2015-511935

PATENT LITERATURE 5: JP-A-2017-149796

PATENT LITERATURE 6: JP-A-2017-061603

PATENT LITERATURE 7: JP-A-2017-052877

SUMMARY OF THE INVENTION

PROBLEMS TO BE SOLVED BY THE INVENTION

An object of the present invention is to provide: a solvent suitably used for synthesizing a polyamic acid such as a polyimide precursor or a polyamide-imide precursor, polyimide, polyamide-imide, polyurethane, or the like, the solvent being capable of efficiently and stably synthesizing a polymer having a high molecular weight, causing no clouding of a reaction solution during and after reaction, having high transparency and storage stability, and being capable of obtaining a synthetic resin excellent in adhesion to a substrate; and a method for producing the synthetic resin using the solvent.

SOLUTIONS TO THE PROBLEMS

As a result of intensive studies to solve the above problems, the present inventors have found a solvent (C) for resin synthesis containing an amide-based solvent (A) and a reaction accelerator (B), and have completed the present invention.

That is, the present invention provides the followings:

(1) a solvent (C) for resin synthesis, comprising: 10 to 99.9999 mass% of an amide-based solvent (A); and 0.0001 to 5 mass% of a reaction accelerator (B), in which the reaction accelerator (B) is an aliphatic or aromatic tertiary amine compound having one or more tertiary amino groups in a molecule of the reaction accelerator (B);

(2) the solvent (C) for resin synthesis according to the above (1), in which the amide-based solvent (A) is an alkoxy-N-substituted propanamide represented by a general formula (1);

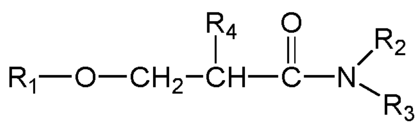

General Formula (1)

(In the formula, $R_1$ to $R_3$ each independently represent a linear alkyl group having 1 to 22 carbon atoms, a branched alkyl group having 3 to 22 carbon atoms, an alkyl ether group having 2 to 22 carbon atoms, an alicyclic hydrocarbon group having 3 to 22 carbon atoms, or an aromatic hydrocarbon group having 6 to 22 carbon atoms, and $R_4$ represents a hydrogen atom or a methyl group. Further, $R_2$ and $R_3$ each independently include a hydrogen atom (except for a case of being a hydrogen atom at the same time) or one that forms a saturated 5- to 7-membered ring (including one having an oxygen atom) together with a nitrogen atom carrying them.)

(3) the solvent (C) for resin synthesis according to the above (1) or (2), in which the reaction accelerator (B) is an aliphatic or aromatic tertiary amine compound having one or more tertiary amino groups in the molecule and further having one or more functional groups selected from an ether group, an ester group, and an amide group in the molecule, represented by a general formula (2);
(In the formula, A, B, and C each independently represent a linear alkyl group having 1 to 22 carbon atoms, a branched alkyl group, an alkyl ether group, an alkyl ester group, or an alkylamide group, having 3 to 22 carbon atoms, an alicyclic hydrocarbon group having 3 to 22 carbon atoms, an aromatic hydrocarbon group having 6 to 22 carbon atoms, a substituent having an ether group represented by a general formula (3), a substituent having an ester group represented by a general formula (4), or a substituent having an amide group represented by a general formula (5) (In the formula, $R_5$, $R_7$, and $R_9$ each represent a linear alkylene having 1 to 22 carbon atoms, a branched alkylene group or alkylene ether group having 3 to 22 carbon atoms, an alicyclic hydrocarbon group having 3 to 22 carbon atoms, or an aromatic hydrocarbon group having 6 to 22 carbon atoms. $R_6$, $R_8$, $R_{10}$, and $R_{11}$ each represent a linear alkyl group having 1 to 22 carbon atoms, a branched alkyl group, an alkyl ether group, an alkyl ester group, or an alkylamide group, having 3 to 22 carbon atoms, an alicyclic hydrocarbon group having 3 to 22 carbon atoms, or an aromatic hydrocarbon group having 6 to 22 carbon atoms. Further, $R_{10}$ and $R_{11}$ may each independently be a hydrogen atom, and may be one that forms a saturated 5- to 7-membered ring (including one having an oxygen atom) together with a nitrogen atom carrying them.)

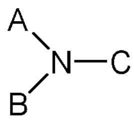

General Formula (2)

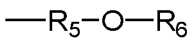

General Formula (3)

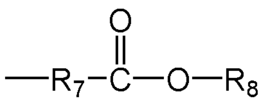

General Formula (4)

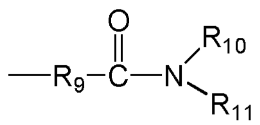

General Formula (5)

(4) the solvent (C) for resin synthesis according to any one of the above (1) to (3), further containing a stabilizer (D) and/or an ionic liquid, in which the stabilizer (D) is a compound having active hydrogen in a molecule of the stabilizer (D);

(5) the solvent (C) for resin synthesis according to any one of the above (1) to (4), in which the solvent (C) is used for synthesizing a polyimide precursor, a polyamide-imide precursor, a polyesterimide precursor, a polyetherimide

precursor, a polyimide resin, a polyamide-imide resin, a polyesterimide resin, a polyetherimide resin, a polyimide-based copolymer resin including any two or more selected from the various precursors, a polyamide resin, a polyurethane resin, a polyester resin, a polyacrylic resin, and a fluororesin;

(6) a method for producing a polyimide precursor and a polyamide-imide precursor, including mixing and polymerizing an acid dianhydride with a diamine and/or a diisocyanate using the solvent (C) for resin synthesis according to any one of the above (1) to (5), and a method for producing a polyimide, including heat-imidizing these precursors;

(7) a method for producing a polyurethane, including mixing and polymerizing a polyol and a diisocyanate using the solvent (C) for resin synthesis according to any one of the above (1) to (5), and a method for producing a polyurethane dispersion, including dispersing the polyurethane in water;

(8) a polyurethane dispersion containing the solvent (C) for resin synthesis according to any one of the above (1) to (5);

(9) a resin varnish containing the solvent (C) for resin synthesis according to any one of the above (1) to (5), the resin varnish being anyone selected from a polyimide varnish, a polyamide-imide varnish, a polyesterimide varnish, a polyetherimide varnish, a polyurethane resin varnish, a polyamide resin varnish, a polyacrylic resin varnish, and a fluororesin varnish;

(10) a binder resin containing: the solvent (C) for resin synthesis according to any one of the above (1) to (5); and at least one resin varnish selected from a polyimide varnish, a polyamide-imide varnish, a polyesterimide varnish, a polyetherimide varnish, a polyurethane resin varnish, a polyamide resin varnish, a polyacrylic resin varnish, and a fluororesin varnish;

(11) an ink composition containing: the solvent (C) for resin synthesis according to any one of the above (1) to (5); and at least one resin varnish selected from a polyimide varnish, a polyamide-imide varnish, a polyesterimide varnish, a polyetherimide varnish, a polyurethane resin varnish, a polyamide resin varnish, a polyacrylic resin varnish, and a fluororesin varnish;

(12) a photosensitive resin composition containing: the solvent (C) for resin synthesis according to any one of the above (1) to (5); and at least one resin varnish selected from a polyimide varnish, a polyamide-imide varnish, a polyesterimide varnish, a polyetherimide varnish, a polyurethane resin varnish, a polyamide resin varnish, a polyacrylic resin varnish, and a fluororesin varnish;

(13) an adhesive resin composition containing: the solvent (C) for resin synthesis according to any one of the above (1) to (5); and at least one resin varnish selected from a polyimide varnish, a polyamide-imide varnish, a polyesterimide varnish, a polyetherimide varnish, a polyurethane resin varnish, a polyamide resin varnish, a polyacrylic resin varnish, and a fluororesin varnish;

(14) a resin composition for a lubricating coating film, containing: the solvent (C) for resin synthesis according to any one of the above (1) to (5); and at least one resin varnish selected from a polyimide varnish, a polyamide-imide varnish, a polyesterimide varnish, a polyetherimide varnish, a polyurethane resin varnish, a polyamide resin varnish, a polyacrylic resin varnish, and a fluororesin varnish; and

(15) a heat-resistant paint containing: the solvent (C) for resin synthesis according to any one of the above (1) to (5); and at least one resin varnish selected from a polyimide varnish, a polyamide-imide varnish, a polyesterimide varnish, a polyetherimide varnish, and a fluororesin varnish.

## EFFECTS OF THE INVENTION

The solvent for resin synthesis of the present invention contains the amide-based solvent (A) and the reaction accelerator (B), and by using the solvent for resin synthesis as a reaction solvent in synthesizing a polyimide precursor, a polyamide-imide precursor, or the like from an acid dianhydride and a diamine and/or a diisocyanate, these reactions can proceed at a controllable high speed, and at the same time, various high molecular weight precursors (polyamic acids) can be obtained, and the obtained polyamic acid solution has excellent transparency, does not become cloudy even when stored for a long period of time, and has good storage stability. From such various polyamic acid solutions, it is possible to easily produce a polyimide film, a heat-resistant paint, and the like having high transparency, high smoothness, and excellent mechanical strength. Furthermore, the solvent for resin synthesis of the present invention

can also be suitably used for the urethanization reaction of a polyol and a diisocyanate, and a polyurethane having a high molecular weight and high performance can be obtained while the reaction proceeds at a controllable high speed.

DESCRIPTION OF THE EMBODIMENTS

Hereinafter, embodiments of the present invention will be described in detail.

An embodiment of the present invention is a solvent (C) for resin synthesis containing an amide-based solvent (A) and a reaction accelerator (B). The amide-based solvent (A) is a compound having one or more amide groups in a molecule of the amide-based solvent (A), and a content of the amide-based solvent (A) is 10 to 99.9999 mass% based on the solvent (C) for resin synthesis. The amide-based solvent (A) is preferably a compound having no active hydrogen and/or no functional group that reacts with active hydrogen in the molecule. When the content of the amide-based solvent (A) is 80 mass% or more, in order to maintain fluidity of the solvent (C) for resin synthesis at a reaction temperature, the amide-based solvent (A) is more preferably in a liquid state in a temperature range of 0°C to 140°C.

The amide-based solvent (A) is not particularly limited, but it is preferred that the amide-based solvent (A) has low risk and harmfulness to human health, ecology, and environment, and it is more preferred that the amide-based solvent (A) is a highly safe compound that does not affect human health, ecology, and environment. Examples of such a compound include N-alkyl (4 or more carbon atoms) -2-pyrrolidone(N-butyl-2-pyrrolidone, N-hexyl-2-pyrrolidone, and the like), N-alkyl (1 or more carbon atoms) alkane (2 or more carbon atoms) amide (N-ethylhexanamide, N-butylbutanamide, and the like), N,N-dialkyl (1 or more carbon atoms) alkane (2 or more carbon atoms) amide (N,N-dimethylbutanamide, N,N-diethylbutanamide, N,N-dimethyloctanamide, and the like), alkoxy (1 or more carbon atoms) -N-alkyl (1 or more carbon atoms) alkane (2 or more carbon atoms) amide (ethoxy-N-methylpropanamide, hexyloxy-N-ethylbutanamide, and the like), alkoxy (1 or more carbon atoms) -N,N-dialkyl (1 or more carbon atoms) alkane (2 or more carbon atoms) amide (methoxy-N,N-dimethylpropanamide, ethoxy-N,N-dimethylbutanamide, lauroxy-N,N-dimethylpropanamide, phenyloxy-N,N-methylethylpropanamide, and the like), alkanoyl (2 or more carbon atoms) morpholine (propanoyl morpholine, butanoyl morpholine, hexanoyl morpholine, octanoyl morpholine, and the like), alkoxy (1 or more carbon atoms) alkanoyl (2 or more carbon atoms) morpholine (methoxyethanoyl morpholine, 4-(3-methoxypropynoyl) morpholine, and the like), and N,N-dialkyl (2 or more carbon atoms) acetamide (N,N-diethylacetamide, N,N-dipropylacetamide, N,N-diisopropylacetamide, N,N-dibutylacetamide, N,N-diisobutylacetamide, N,N-dihexylacetamide, and the like). These amide-based solvents (A) may be used alone or in combination of two or more of solvents.

The amide-based solvent (A) is preferably an alkoxy-N-substituted propanamide and an alkoxy-N,N-disubstituted propanamide represented by the following general formula (1). (In the formula, $R_1$ to $R_3$ each independently represent a linear alkyl group having 1 to 22 carbon atoms, a branched alkyl group having 3 to 22 carbon atoms, an alkyl ether group having 2 to 22 carbon atoms, an alicyclic hydrocarbon group having 3 to 22 carbon atoms, or an aromatic hydrocarbon group having 6 to 22 carbon atoms, and $R_4$ represents a hydrogen atom or a methyl group. Further, $R_2$ and $R_3$ each independently include a hydrogen atom (except for a case of being a hydrogen atom at the same time) or one that forms a saturated 5- to 7-membered ring (including one having an oxygen atom) together with a nitrogen atom carrying them.) This is because the alkoxy-N-substituted propanamide and the alkoxy-N,N-disubstituted propanamide are industrially produced, further have an ether group and an amide group simultaneously in the molecule, and are excellent in solubility for various synthetic resins and raw materials thereof.

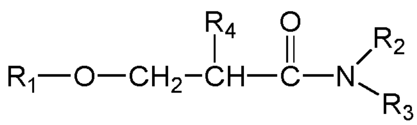

General Formula (1)

The alkoxy-N-substituted propanamide and the alkoxy-N,N-disubstituted propanamide are compounds including functional groups shown in $R_1$, $R_2$ and $R_3$ in any combination, and examples thereof include methoxy-N-methylpropanamide ($R_1$ and $R_2$ are methyl groups, and $R_3$ is a hydrogen atom), methoxy-N,N-dimethylpropanamide ($R_1$, $R_2$, and $R_3$ are all methyl groups), 3-methoxy-N,N-diethylpropanamide ($R_1$ is a methyl group, and $R_2$ and $R_3$ are ethyl groups), butoxy-N,N-dimethylpropanamide ($R_1$ is a butyl group, and $R_2$ and $R_3$ are methyl groups), lauroxy-N,N-dimethylpropanamide ($R_1$ is a lauryl group, and $R_2$ and $R_3$ are methyl groups), stearoxy-N-ethylpropanamide ($R_1$ is a stearyl group, $R_2$ is a hydrogen atom, and $R_3$ is an ethyl group), phenyloxy-N,N-methylethylpropanamide ($R_1$ is a phenyl group, $R_2$ is a methyl group, and $R_3$ is an ethyl group), ethoxy-N-phenylpropanamide ($R_1$ is an ethyl group, $R_2$ is a hydrogen atom, and $R_3$ is a phenyl group), methoxy-N-cyclohexylpropanamide ($R_1$ is a methyl group, $R_2$ is a cyclohexyl group, and $R_3$ is a hydrogen atom), isooctyloxy-N-ethoxyethylpropanamide ($R_1$ is an isooctyl group, $R_2$ is a hydrogen atom, and $R_3$ is

an ethoxyethyl group), cyclohexyloxy-N,N-methylethylpropanamide ($R_1$ is a cyclohexyl group, $R_2$ is a methyl group, and $R_3$ is an oleyl group), 3-isopropoxy-N,N-dimethylpropanamide ($R_1$ is an isopropyl group, and $R_2$, and $R_3$ are methyl groups), and 4-(3-methoxypropynoyl) morpholine ($R_1$ is a methyl group, and $R_2$ and $R_3$ are groups of saturated 6-membered ring having an oxygen atom formed together with a nitrogen atom carrying them). These compounds may be used alone or in combination of two or more.

Further, the alkoxy-N-substituted propanamide and the alkoxy-N,N-disubstituted propanamide are preferably compounds represented by the general formula (6) (in the formula, $R_{12}$ represents a linear alkyl group having 1 to 18 carbon atoms or branched alkyl group having 3 to 18 carbon atoms, $R_{13}$ and $R_{14}$ each independently represent a hydrogen atom, a linear alkyl group having 1 to 6 carbon atoms, or a branched alkyl group having 3 to 6 carbon atoms (except when they are hydrogen atoms at the same time), and $R_{15}$ represents a hydrogen atom or a methyl group), because inexpensive industrial raw materials can be easily obtained and the compounds can be industrially produced with a high yield by a structure having low steric hindrance. Further, methoxy-N, N-dimethylpropanamide and butoxy-N,N-dimethylpropaneamide are particularly preferred because they are high safety for operators and environment and are generally handled as industrial products.

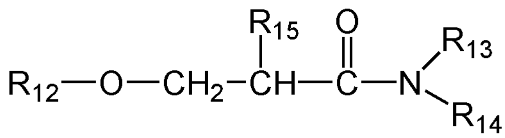

General Formula (6)

The reaction accelerator (B) in the present invention is a compound having one or more tertiary amino groups in a molecule of the reaction accelerator (B). A substituent of the amino group of the reaction accelerator (B) is not particularly limited, and may be aliphatic or aromatic, and may be chain, cyclic, or may or may not have an unsaturated group. Further, when the reaction accelerator (B) does not have a hydrogen atom bonded to a hetero atom in the molecule, it is preferred because the reaction accelerator (B) does not cause a side reaction with an acid dianhydride, an isocyanate compound, or the like, that is a raw material of the synthetic resin, and a synthetic resin having a high molecular weight can be obtained in a short time. When a resin synthesis reaction is performed using the solvent (C) for resin synthesis, it is preferable to select a compound having a boiling point higher than the reaction temperature as the reaction accelerator (B) since the compound does not volatilize during the reaction and the reaction can be efficiently accelerated. Examples of the reaction accelerator (B) include: tertiary aliphatic amines such as trialkyl (1 or more carbon atoms, and may be the same or different) amine, dialkyl (1 or more carbon atoms, and may be the same or different) cyclohexylamine, and tricyclohexylamine; tertiary aromatic amines such as dialkyl (1 or more carbon atoms, and may be the same or different) aniline, dialkyl (1 or more carbon atoms, and may be the same or different) 2,4,6-trimethylaniline, N-methyldiphenylamine, and triphenylamine; and tertiary aliphatic amines having an aromatic substituent such as N,N-dimethylbenzylamine, and N-methyldibenzylamine. These reaction accelerators (B) may be used alone or in combination of two or more.

The reaction accelerator (B) more preferably further has one or more functional groups selected from an ether group, an ester group, and an amide group in the molecule. By having these functional groups, a reaction accelerating effect by the reaction accelerator (B) (increase in reaction rate and/or increase in molecular weight of produced polymer) tends to be improved. Although a mechanism related to these effects is not clear, the present inventors speculate that it is because polarity of the reaction accelerator (B) is increased due to coexistence of the ether group, the ester group, or the amide group.

The reaction accelerator (B) having an ether group in the molecule (hereinafter, also referred to as "reaction accelerator (b1)" or simply "b1") is not particularly limited, and has one or more ether groups in any substituent of the tertiary amino group. In addition, these ether groups may be formed in a chain structure or may be formed in a cyclic structure. Examples of the reaction accelerator (b1) include (methoxyethyl)diethylamine, N,N-dimethyldimethoxymethanamine, (ethoxyethyl)dibutylamine, (methoxyhexyl)ethylhexylamine, (methoxyethyl)diphenylamine, di(methoxyethyl) cyclohexylamine, and tri(butoxymethyl) amine. These reaction accelerators (b1) may be used alone or in combination of two or more.

The reaction accelerator (B) having an ester group in the molecule (hereinafter, also referred to as "reaction accelerator (b2)" or simply "b2") is not particularly limited, and has one or more ester groups in any substituent of the tertiary amino group. In addition, these ester groups may be formed in a chain structure or may be formed in a cyclic structure. Examples of the reaction accelerator (b2) include methyl 3-methoxypropionate, methyl dimethylaminopropionate, butyl dimethylaminopropionate, methyl dibutylaminopropionate, butyl dibutylaminopropionate, ethyl diethylaminobutyrate, butyl ethylhexylaminoacetate, isopropyl morpholinopropionate, and ethyl methylbenzylaminolaurate. These

reaction accelerators (b2) may be used alone or in combination of two or more.

The reaction accelerator (B) having an amide group in the molecule (hereinafter, also referred to as "reaction accelerator (b3)" or simply "b3") is not particularly limited except for the amide-based solvent (A), and may have one or more amide groups in any substituent of the tertiary amino group. In addition, these amide groups may be formed in a chain structure or may be formed in a cyclic structure. Examples of the reaction accelerator (b3) include dimethylamino-N,N-dimethylpropionic acid amide, dimethyl-N,N-dibutylaminopropionic acid amide, dibutylamino-N,N-dimethylpropionic acid amide, dibutylamino-N,N-dibutylpropionic acid amide, diethylamino-N,N-dimethylbutyric acid amide, ethylhexylamino-N,N-diethylacetic acid amide, morpholinopropionic acid morpholide, methylbenzylamino-N,N-dimethyllauric acid amide, and N,N-dimethylpropionamide. These reaction accelerators (b3) may be used alone or in combination of two or more.

The reaction accelerator (b1) having an ether group in the molecule, the reaction accelerator (b2) having an ester group in the molecule, and the reaction accelerator (b3) having an amide group in the molecule may be used alone or in combination of two or more selected from the group consisting of these accelerators.

The solvent (C) for resin synthesis of the present embodiment contains the amide-based solvent (A), and the content of the amide-based solvent (A) is 10 to 99.9999 mass% based on a total amount of the solvent (C) for resin synthesis. The content of the amide-based solvent (A) is preferably 20 to 99.99 mass%, and more preferably 30 to 99.8 mass%. When the amide-based solvent (A) is contained in an amount of 10 mass% or more in the solvent (C) for resin synthesis, it is preferred because the amide-based solvent (A) has sufficient solubility for various resin synthesis raw materials and the synthetic resin to be obtained. Further, when the amide solvent (A) is contained in an amount of 99.9999 mass% or less, it is preferred because the reaction accelerator (B) that is an essential component of the solvent (C) for resin synthesis can be contained in an amount of 0.0001 mass% or more, and the reaction accelerating effect by the reaction accelerator (B) can be obtained.

The solvent (C) for resin synthesis of the present embodiment contains the reaction accelerator (B) in addition to the amide-based solvent (A). The content of the reaction accelerator (B) is 0.0001 to 5 mass% based on the total amount of the solvent (C) for resin synthesis. When the reaction accelerator (B) is contained in an amount of 0.0001 mass% or more in the solvent (C) for resin synthesis, it is preferred because the effect of accelerating the resin synthesis reaction can be obtained. On the other hand, when the content of the reaction accelerator (B) exceeds 5% by mass based on the total amount of the solvent (C) for resin synthesis, it is not preferred because the reaction rate may be difficult to control. Since the reaction accelerator (B) has a tertiary amino group, it is easy to form a neutralized salt with a carboxylic acid group generated during resin synthesis, and by protecting the carboxylic acid group of the polyamic acids that are the polyimide precursor and the polyamide-imide precursor as the neutralized salt, transparency and storage stability of these precursor solutions are improved. Such a neutralized salt evaporates as the precursor is heat-imidized, and a polyimide resin and a polyamide-imide resin having a high molecular weight can be obtained by an imidization reaction of a deprotected carboxylic acid group. From these viewpoints, the content of the reaction accelerator (B) is preferably 0.001 to 2 mass%, and more preferably 0.01 to 1 mass% based on the total amount of the solvent (C) for resin synthesis.

Further, as to the contents of the reaction accelerators (b1), (b2), and (b3) that can be contained in the reaction accelerator (B), since b1, b2, and b3 can be used alone, b1, b2, and b3 are each 0.0001 to 5 mass% based on the total amount of the solvent (C) for resin synthesis. However, when two or more arbitrarily selected from b1, b2, and b3 are mixed and used, a total content thereof does not exceed 5 mass% based the total amount of the solvent (C) for resin synthesis.

The reaction accelerator (B) is preferably a reaction accelerator (b3) having an amide group in the molecule. It is considered that by having one or more amino groups and one or more amide groups, the polarity of the entire molecule is increased, and the reaction accelerating effect by the amino group is increased by influence of the amide group, or the reaction accelerating effect by the amide group is also generated by interaction between the amide group and the amino group in the molecule of b3 in addition to the reaction accelerating effect by the amino group. Further, depending on reaction conditions such as the kind of raw materials and products of resin synthesis, the charging ratio of various raw materials, and the reaction temperature and reaction time, and further depending on, for example, the desired molecular weight of the synthetic resin to be produced, b3 and the reaction accelerator (b2) having an ester group in the molecule can be mixed and used, b3 and the reaction accelerator (b1) having an ether group in the molecule can be mixed and used, and b3, b2, and b1 can be mixed and used.

As one embodiment of the solvent (C) for resin synthesis, the amide-based solvent (A) and other solvents can be used in combination. Examples of the other solvents include: aromatic hydrocarbon solvents such as xylene, solvent naphtha, toluene, ethylbenzene, and tetralin; urea-based solvents having a urea group such as 1,3-dimethylurea, 1,3-diethylurea, 1,3-diphenylurea, 1,3-dicyclohexylurea, tetramethylurea, tetraethylurea, 2-imidazolidinone, propyleneurea, 1,3-dimethyl-2-imidazolidinone, and N,N-dimethylpropyleneurea; lactone-based solvents such as β-propiolactone, γ-butyrolactone, α-acetyl-γ-butyrolactone, γ-valerolactone, δ-valerolactone, and ε-caprolactone; ether-based solvents, ketone solvents, and ester-based solvents such as dibutyl ether, diethylene glycol monomethyl ether, diethylene glycol

monoethyl ether, ethylene glycol dimethyl ether, diethylene glycol diethyl ether, dipropylene glycol dimethyl ether, diethylene glycol monoethyl ether acetate, diethylene glycol monobutyl ether acetate, 1,4-dioxane, 2-methyltetrahydrofuran, cyclopentyl methyl ether, 4-methyltetrahydropyran, acetophenone, acetylacetone, butyl acetate, ethyl benzoate, 2-ethoxyethyl acetate, 2-butoxyethyl acetate, ethyl acetoacetate, isoamyl acetate, n-pentyl acetate, and ethyl propionate; and general-purpose solvents such as 1,3-dioxolane, dimethyl sulfoxide, nitrobenzene, N-formylmorpholine, and 4-acetylmorpholine. These solvents may be used alone or in combination of two or more as the other solvents.

The content of the other solvents is 89.9999 mass% or less, preferably 5 to 50 mass%, and more preferably 10 to 30 mass% based on the total amount of the solvent (C) for resin synthesis. When the other solvent is contained in an amount of 89.9999 mass% or less, it is preferred because the amide-based solvent (A) that is an essential component of the solvent (C) for resin synthesis can be contained in an amount of 10 mass% or more, the reaction accelerator (B) can be contained in an amount of 0.0001 mass% or more, and high solubility of the amide-based solvent (A) for various resin synthesis raw materials and the synthetic resin to be obtained, and the reaction accelerating effect by the reaction accelerator (B) can be obtained.

In the embodiment, boiling points of the amide-based solvent (A) and the other solvents are preferably 80°C to 400°C at normal pressure. Further, the boiling points of these solvents are more preferably 100°C to 350°C, and particularly preferably 180°C to 280°C at normal pressure. If the boiling point of the solvent is lower than 80°C, when the reaction is performed at a temperature of 80°C or higher in a synthetic resin production process, concentration of the reaction solution changes due to evaporation of the solvent, and it is difficult to reproduce the molecular weight and solution viscosity of the resin precursor and the synthetic resin to be obtained. On the other hand, if the boiling point of the solvent is higherthan 400°C, in a production process in which a solution of the polyamic acid is formed into a film on a substrate of a metal or the like and imidized stepwise at a temperature of 100°C to 500°C, the solvent is not completely evaporated, a large amount of the solvent may remain in a product such as a polyimide film obtained, or the solvent may be carbonized in the product, and there is a problem that transparency, strength, elongation, heat resistance, chemical resistance, and the like of the product are deteriorated.

As the embodiment of the solvent (C) for resin synthesis, the amide-based solvent (A) and an ionic liquid can be used in combination. Further, as the solvent (C) for resin synthesis, the amide-based solvent (A), the other solvents, and the ionic liquid can be used in combination. In the present invention, the ionic liquid is a salt containing an anion and a cation, and a state in the temperature range of 0°C to 150°C is a liquid. Since the ionic liquid has high polarity and excellent solubility for a hardly soluble synthetic resin, it is possible to obtain a polyamic acid solution or the like having higher transparency and stability by containing the ionic liquid. In addition, since the ionic liquid is hardly volatile and flame-retardant, has high thermal stability and chemical stability, and has high ionic conductivity and excellent electrochemical properties, the ionic liquid does not adversely affect a high-temperature imidization reaction of the polyamic acid, and when a small amount of the ionic liquid is contained in a product such as a polyimide film, the product can be provided with flexibility, the imidization reaction is allowed to proceed at a temperature equal to or higher than the glass transition temperature, and the heat resistance is further improved.

The ionic liquid is classified into an imidazolium salt, a pyrrolidinium salt, a pyridinium salt, a piperidinium salt, an ammonium salt, and a phosphonium salt from cations of a basic skeleton constituting the ionic liquid. In addition, various ionic liquids can be selected by changing anion species of these salts or changing substituents such as alkyl groups of cations and anions. Among them, the imidazolium salt, the pyrrolidinium salt, the pyridinium salt, the piperidinium salt, and the ammonium salt are preferred because they have a nitrogen atom and exhibit basicity. This is considered to be because the amide-based solvent contained in the solvent (C) for resin synthesis is often neutral to weakly basic, and the ionic liquid exhibiting basicity has good compatibility with the amide-based solvent. Further, the imidazolium salt and the ammonium salt are more preferred because high-purity industrial products can be easily obtained. These ionic liquids may be used alone or in combination of two or more.

The content of the ionic liquid is 20 mass% or less, preferably 0.001 to 10 mass%, and more preferably 0.01 to 5 mass% based on the total amount of the solvent (C) for resin synthesis. When the content of the ionic liquid exceeds 20 mass%, a large amount of the ionic liquid remains in a final product such as a polyimide film obtained by directly heating the solution of the polyamic acid, and even if the solution of the polyamic acid is once subjected to precipitation treatment and then imidized, a small amount of the ionic liquid remains in the final product, which may adversely affect quality of the product. On the other hand, when the ionic liquid is contained in an amount of 0.001 mass% or more, it is preferred because the flexibility, the elongation, and the electrochemical properties can be provided to the final product such as a polyimide film.

The solvent (C) for resin synthesis of the present embodiment can further contain a stabilizer (D). The stabilizer (D) in the present specification is a compound having active hydrogen in the molecule, and specific examples thereof include water, alcohol, and amine. Since the stabilizer (D) has active hydrogen in the molecule, the stabilizer (D) reacts with an acid dianhydride or a diisocyanate, which is a raw material of the synthetic resin, to protect a reactive group of these compounds, so that the reaction rate of resin synthesis can be slowed down as necessary, and cloudiness and insoluble matter generation (gelation) of the reaction liquid can be prevented, and rate control of the resin synthesis

reaction, molecular weight control of the resin, stability control of resin solution, and the like can be performed more precisely. In particular, in a multistage reaction in which the reaction is performed while changing the reaction conditions such as temperature, the reaction is allowed to proceed smoothly in a wide range of temperatures by using the reaction accelerator (B) and the stabilizer (D) in combination, and a high molecular weight resin or a resin solution having high transparency and storage stability can be obtained.

From the viewpoint of easy deprotection, the stabilizer (D) is preferably water, an alcohol having a boiling point lower than 140°C, or an amine (excluding (B)) having a boiling point lower than 140°C. In addition, from the viewpoint of easy removal from the reaction liquid by distillation, the stabilizer (D) is more preferably water, an alcohol having a boiling point of 120°C or lower, or an amine (excluding (B)) having a boiling point of 120°C or lower, and particularly preferably an alcohol having a boiling point of 100°C or lower or an amine (excluding (B)) having a boiling point of 100°C or lower. The stabilizers (D) may be used alone or in combination of two or more.

The alcohol as the stabilizer (D) is not particularly limited as long as it has a hydroxy group in the molecule. As the alcohol, a monofunctional alcohol having only one hydroxy group in the molecule, a difunctional alcohol having two hydroxy groups in the molecule, and a polyfunctional alcohol having three or more hydroxy groups in the molecule can be used. Among them, the monofunctional alcohol is preferred because both protection reaction and deprotection reaction proceed relatively easily. Examples of the monofunctional alcohol include monofunctional alcohols having one primary or secondary hydroxy group in the molecule, such as methyl alcohol, ethyl alcohol, isopropanol, t-butyl alcohol, 9-decene-1-ol, 1-octacosanol, diethylene glycol monomethyl ether, propylene glycol-1-monomethyl ether, 4-dimethylamino-1-butanol, cyclohexanol, and benzyl alcohol. Among them, methyl alcohol, ethyl alcohol, n-propanol, isopropanol, n-butyl alcohol, and t-butyl alcohol have boiling points of 120°C or lower at normal pressure, and are more preferred because they can be deprotected at a low temperature. These alcohols may be used alone or in combination of two or more.

The amine as the stabilizer (D) is not particularly limited as long as it is a primary amine or a secondary amine having an amino group in the molecule, excluding the reaction accelerator (B). Among them, the secondary amine is preferred because both the protection reaction and the deprotection reaction proceed relatively easily. Examples of the secondary amine include secondary amines such as dimethylamine, ethylmethylamine, diethylamine, dipropylamine, diisopropylamine, dibutylamine, diisobutylamine, dicyclohexylamine, diallylamine, piperidine, pyrrolidine, morpholine, N-methylbenzylamine, and dibenzylamine. Among them, dimethylamine, ethylmethylamine, diethylamine, dipropylamine, diisopropylamine, diallylamine, piperidine, and pyrrolidine have boiling points of 120°C or lower at normal pressure, and are more preferable because they can be deprotected at a low temperature. These amines may be used alone or in combination of two or more.

The stabilizer (D) may be used alone or in combination of two or more selected from the group consisting of water, the various alcohols, and the various amines.

When the stabilizer (D) is used, it is speculated that a mechanism of action of the stabilizer (D) varies depending on the type of the stabilizer (D) and the type of the raw material for the resin synthesis reaction. For example, in synthesis of the polyimide precursor and the polyimide resin from the acid dianhydride and the diamine, first, the acid dianhydride and the diamine are subjected to a ring-opening polyaddition reaction in the solvent to obtain the polyamic acid (having a carboxylic acid group and an amide) as the polyimide precursor, and then heating causes an intramolecular dehydration cyclization reaction (formation of an imide group by dehydration of the carboxylic acid group and the amide group) of the polyamic acid to obtain the polyimide. When water is present in this reaction system, one carboxylic acid anhydride group of the acid dianhydride is hydrolyzed to form two carboxylic acid groups, the number of functional groups reactive with the amino group increases, stoichiometry of the charged diamine and acid dianhydride collapses, a polymerization degree of the polyamic acid does not increase, and a high molecular weight polyimide resin cannot be finally obtained, and thus it is not preferable to add water as the stabilizer. On the other hand, when the alcohol or the amine is present in this reaction system, one carboxylic acid anhydride group and an alcohol react with each other to form one carboxylic acid group and one carboxylic acid ester group, or one carboxylic acid anhydride group and an amine react with each other to form one carboxylic acid group and one carboxylic acid amide group, so that a polyamic acid partially substituted with an amic acid ester group or a polyamic acid partially substituted with an amic acid amide group having a high degree of polymerization can be obtained without changing the number of functional groups reactive with the amino group. Since the polyamic acid ester and the polyamic acid amide have higher solution stability than the corresponding polyamic acid, a polyimide precursor solution having high transparency and high stability can be obtained by adding the alcohol or the amine as the stabilizer to the solvent for resin synthesis. In addition, the polyamic acid ester and the polyamic acid amide are imidized with elimination of alcohol and amine by heating, and the high molecular weight polyimide resin is finally obtained. Therefore, when the polyimide precursor and the polyimide resin are synthesized from the acid dianhydride and the diamine, it is preferable to add the alcohol or the amine as the stabilizer to the solvent.

Further, when the polyamide-imide precursor and the polyamide-imide resin are synthesized from the acid dianhydride and the diisocyanate using the stabilizer (D), the acid anhydride group is hydrolyzed to obtain the carboxylic acid group by containing a small amount of water in the reaction system, and the obtained carboxylic acid group reacts with an isocyanate group of the diisocyanate to form an amide group, so that the polymerization degree of the polyamic

acid that is the polyamide-imide precursor is not reduced, and conversely, the reaction rate is increased and the molecular weight (polymerization degree) is increased. Furthermore, when the alcohol or the amine is present in this reaction system, an effect similar to that of the reaction system of the polyimide precursor is observed, and at the same time, the alcohol or the amine has a protective effect on the isocyanate group, so that by protecting or deprotecting as necessary, a polyimide precursor solution having higher transparency, higher stability, and a higher molecular weight, and a polyamide-imide resin having a high molecular weight can be obtained. Therefore, when the polyamide-imide precursor and the polyamide-imide resin are synthesized from the acid dianhydride and the diisocyanate, it is preferable to add water, alcohol or amine as the stabilizer to the solvent.

The content of the stabilizer (D) can be appropriately changed depending on the type of the resin synthesis reaction and the type of the reaction accelerator (B) or the stabilizer (D) to be used, and is preferably 10 to 500 mass% based on the total amount of the reaction accelerator (B). Within this range, the reaction rate in a predetermined temperature range can be easily controlled for both synthesis of the precursors such as the polyamide-imide precursor or the polyimide precursor and synthesis of polyurethane. Further, the content of the stabilizer (D) is more preferably 20 to 300 mass%, and particularly preferably 50 to 200 mass% based on the reaction accelerator (B).

The solvent (C) for resin synthesis of the present embodiment can be suitably used for synthesizing the polyimide precursor, the polyamide-imide precursor, a polyesterimide precursor, a polyetherimide precursor, the polyimide resin, a polyamide-imide resin, a polyesterimide resin, a polyetherimide resin, a polyimide-based copolymer resin including any two or more selected from the various precursors, a polyamide resin, a polyurethane resin, a polyester resin, a polyacrylic resin, and a fluororesin.

Examples of the acid dianhydride used as a raw material of the polyimide resin, the polyamide-imide resin, the polyesterimide resin, the polyetherimide resin, and any precursor thereof include: aliphatic tetracarboxylic dianhydrides such as pyromellitic dianhydride, 3,3',4,4' - biphenyltetracarboxylic dianhydride, 2,3,3',4' -biphenyltetracarboxylic dianhydride, 2,2',3,3' - biphenyltetracarboxylic dianhydride, 3,3',4,4' -benzophenonetetracarboxylic dianhydride, 2,2',3,3' -benzophenonetetracarboxylic dianhydride, 2,2-bis(3,4-dicarboxyphenyl)propane dianhydride, 2,2-bis(2,3-dicarboxyphenyl)propane dianhydride,1,1-bis(3,4-dicarboxyphenyl)ethane dianhydride, 1,1-bis(2,3-dicarboxyphenyl)ethane dianhydride, bis(3,4-dicarboxyphenyl)methane dianhydride, bis(2,3-dicarboxyphenyl)methane dianhydride, 4,4'-oxydiphthalic dianhydride, 1,2,5,6-naphthalenetetracarboxylic dianhydride, 9,9-bis(3,4-dicarboxyphenyl)fluorenic dianhydride, 9,9-bis(4-(3,4-dicarboxyphenoxy)phenyl)fluorenic dianhydride, 2,3,6,7-naphthalenetetracarboxylic dianhydride, 2,3,5,6-pyridinetetracarboxylic dianhydride, 3,4,9,10-perylenetetracarboxylic dianhydride, 2,2-bis(3,4-dicarboxyphenyl)hexafluoropropane dianhydride, and butanetetracarboxylic dianhydride; and aliphatic tetracarboxylic dianhydrides containing a cyclic aliphatic group, such as 1,2,3,4-cyclopentanetetracarboxylic dianhydride. These acid dianhydrides may be used alone or in combination of two or more.

Examples of the diamine compound used as the raw material of the polyimide resin, the polyamide-imide resin, the polyesterimide resin, the polyetherimide resin, and any precursor thereof include: aromatic diamines such as 3,4'-diaminodiphenyl ether, 4,4'-diaminodiphenyl ether, 3,4'-diaminodiphenylmethane, 4,4'-diaminodiphenylmethane, 1,4-bis(4-aminophenoxy)benzene, benzidine, m-phenylenediamine, p-phenylenediamine, 1,5-naphthalenediamine, 2,6-naphthalenediamine, bis(4-aminophenoxy)biphenyl, bis(4-(4-aminophenoxy)phenyl)ether, 1,4-bis(4-aminophenoxy)benzene, 2,2'-dimethyl-4,4'-diaminobiphenyl, 2,2'-diethyl-4,4'-diaminobiphenyl, 3,3'-dimethyl-4,4'-diaminobiphenyl, 3,3'-diethyl-4,4'-diaminobiphenyl, 2,2',3,3'-tetramethyl-4,4'-diaminobiphenyl, 3,3',4,4'-tetramethyl-4,4'-diaminobiphenyl, 2,2'-di(trifluoromethyl)-4,4'-diaminobiphenyl, 9,9-bis(4-aminophenyl)fluorene, 2,2'-bis(trifluoromethyl)-5,5'-dihydroxybenzidine, 3,5-diaminobenzoic acid, 3,4-diaminobenzoic acid, 2,5-diaminobenzoic acid, and a compound in which at least a part of hydrogen atoms of these aromatic rings are substituted with an alkyl group or a halogen atom; and aliphatic diamines containing a cyclic aliphatic group, such as cyclohexyldiamine and methylenebiscyclohexylamine. These diamine compounds may be used alone or in combination of two or more.

Examples of the diisocyanate, which is used as a raw material of the polyamide-imide resin and a precursor thereof and a raw material of the polyurethane resin, include aliphatic diisocyanates, aromatic diisocyanates, and aromatic aliphatic diisocyanates. These diisocyanate compounds may be used alone or in combination of two or more.

Examples of the aliphatic diisocyanate include aliphatic diisocyanates such as ethylene diisocyanate, trimethylene diisocyanate, tetramethylene diisocyanate, pentamethylene diisocyanate (PDI), hexamethylene diisocyanate (HDI), octamethylene diisocyanate, nonamethylene diisocyanate, 2,2'-dimethylpentane diisocyanate, 2,2,4-trimethylhexane diisocyanate, decamethylene diisocyanate, butene diisocyanate, 1,3-butadiene-1,4-diisocyanate, 2,4,4-trimethylhexamethylene diisocyanate, 1,6, 11-undecamethylene triisocyanate, 1,3,6-hexamethylene triisocyanate, 1,8-diisocyanate-4-isocyanatomethyloctane, 2,5,7-trimethyl-1,8-diisocyanate-5-isocyanatomethyloctane, bis(isocyanatoethyl)carbonate, bis(isocyanatoethyl)ether, 1,4-butylene glycol dipropyl ether-w, w'-diisocyanate, lysine isocyanatomethyl ester, lysine triisocyanate, 2-isocyanatoethyl-2,6-diisocyanate hexanoate, 2-isocyanatopropyl -2,6-diisocyanate hexanoate, bis(4-isocyanate-n-butylidene)pentaerythritol, and 2,6-diisocyanate methylcaproate.

Further, examples of the alicyclic diisocyanate having a cyclic structure among the aliphatic diisocyanates include alicyclic diisocyanates such as isophorone diisocyanate (IPDI), 1,3- or 1,4-bis(isocyanatomethyl)cyclohexane

or a mixture thereof (bis(isocyanatomethyl)cyclohexane (H6XDI)), 4,4'-, 2,4'- or 2,2'-dicyclohexylmethane diisocyanate or a mixture thereof (H12MDI), 1,3- or 1,4-cyclohexanediisocyanate or a mixture thereof, 1,3- or 1,4-bis(isocyanatoethyl)cyclohexane, methylcyclohexanediisocyanate, 2,2'-dimethyldicyclohexylmethane diisocyanate, dimer acid diisocyanate, 2,5- or 2,6-diisocyanatomethylbicyclo[2,2,1]-heptane (NBDI), 2-isocyanatomethyl-2-(3-isocyanatopropyl)-5-isocyanatomethylbicyclo-[2,2,1]-heptane, 2-isocyanatomethyl-2-(3-isocyanatopropyl)-6-isocyanatomethylbicyclo-[2,2,1]-heptane, 2-isocyanatomethyl-3-(3-isocyanatopropyl)-5-(2-isocyanatoethyl)-bicyclo-[2,2,1]-heptane, 2-isocyanatomethyl-3-(3-isocyanatopropyl)-6-(2-isocyanatoethyl)-bicyclo-[2,2,1]-heptane, 2-isocyanatomethyl-2-(3-isocyanatopropyl)-5-(2-isocyanatoethyl)-bicyclo-[2,2,1]-heptane, and 2-isocyanatomethyl-2-(3-isocyanatopropyl)-6-(2-isocyanatoethyl)-bicyclo-[2,2,1]-heptane.

Examples of the aromatic diisocyanate include aromatic diisocyanates such as 2,4-tolylene diisocyanate, 2,6-tolylene diisocyanate, isomer mixtures (TDI) of these tolylene diisocyanates, 4,4'-diphenylmethane diisocyanate, 2,4'-diphenylmethane diisocyanate, 2,2'-diphenylmethane diisocyanate, arbitrary isomer mixtures (MDI) of these diphenylmethane diisocyanates, toluidine diisocyanate (TODI), paraphenylene diisocyanate, and naphthalene diisocyanate (NDI).

Examples of the aromatic aliphatic diisocyanate include aromatic aliphatic diisocyanates such as 1,3- or 1,4-xylylene diisocyanate, a mixture thereof (XDI), and 1,3- or 1,4-tetramethylxylylene diisocyanate, and a mixture thereof (TMXDI).

Specific examples of polyol used as a raw material of the polyurethane resin include polyether polyol, polyester polyol, polycarbonate polyol, polyurethane polyol, epoxy polyol, vegetable oil polyol, polyolefin polyol, acrylic polyol, silicone polyol, fluorine polyol, and vinyl monomer-modified polyol. These polyols may be used alone or in combination of two or more.

The solvent (C) for resin synthesis of the present embodiment is excellent in solubility for the polyimide resin, the polyamide-imide resin, the polyesterimide resin, the polyetherimide resin, precursors of the resins, the polyurethane resin, the polyamide resin, the polyacrylic resin, the fluororesin, and the like, and thus can be suitably used as a solvent used for production and dissolution of various resins. In addition, by using the solvent (C) for resin synthesis of the present embodiment, the synthesis reaction of the various resins can be completed in a short time, the reaction easily proceeds even at a low temperature, and can be easily controlled even at a high temperature, and a resin having a high molecular weight, high transparency, and good heat resistance and mechanical properties can be obtained.

When various resins are synthesized using the solvent (C) for resin synthesis, the synthesis can be performed under known reaction conditions. That is, a reaction apparatus, the raw materials, the charging ratio of the raw materials, a method of charging the raw materials, the reaction temperature, the reaction time, a purification method, and the like are the same as before. Further, when the polyimide precursor, the polyamide-imide precursor (hereinafter, also collectively referred to as the polyamic acid), and the polyurethane are synthesized at the reaction temperature, the reaction can be completed even at a lower temperature than before. On the other hand, a dehydration imidization reaction of the various precursors can be performed at a higher temperature than before, and resin products such as polyimide and polyamide-imide having higher heat resistance and higher chemical resistance can be obtained.

In the reaction for synthesizing the polyimide precursor from an acid dianhydride and a diamine using the solvent (C) for resin synthesis in the embodiment, the reaction temperature is -20°C to 80°C, preferably 0°C to 70°C, and more preferably 10°C to 60°C. In the reaction for synthesizing the polyamide-imide precursor from an acid dianhydride and a diisocyanate, the reaction temperature is 40°C to 140°C, preferably 60°C to 130°C, and more preferably 80°C to 120°C. The synthesis of these precursors is highly productive because the reaction can proceed at a sufficient rate and can be completed in a short time, if reaction temperatures are respectively equal to or higher than lower limit temperatures. In addition, when the reaction temperatures are respectively equal to or lower than upper limit temperatures, progress of an intramolecular imidization reaction of the produced polyamic acid is suppressed, the transparency of the polyamic acid solution is good, there is no temporal cloudiness and no precipitation of gel-like insoluble matter, and the storage stability is good. Note that the reaction time of these reactions varies depending on the reaction temperature, but is usually in a range of 1 hour to 24 hours.

In the reaction for synthesizing the polyurethane from a polyol and a diisocyanate using the solvent (C) for resin synthesis in the embodiment, the reaction temperature is 20°C to 150°C, preferably 30°C to 120°C, and more preferably 40°C to 110°C. By the presence of the reaction accelerator (B), the urethanization reaction is allowed to proceed even at a low temperature of about 20°C, and a polyurethane having a high molecular weight can be obtained. In addition, when the alcohol or the amine is present as the stabilizer, the isocyanate group of the diisocyanate is protected, self-polymerization (uretidionization, isocyanuration, or the like) of the diisocyanate by heating and a side reaction of the diisocyanate with the amide-based solvent at a high temperature can be suppressed, and a high molecular weight polyurethane solution that is not gelled can be obtained. The polyurethane solution thus obtained has a low viscosity, and can be suitably used as a binder resin for coating agents, inks, adhesives, and the like.

A polyurethane resin solution containing the solvent (C) for resin synthesis produced in the embodiment is added to water, and the polyurethane resin is dispersed in water to produce polyurethane dispersions (PUDs). The

PUDs are widely used in environmentally friendly low VOC type water-based paints, adhesives, ink binders, coating agents, and the like. Since an organic solvent contained in the PUDs is required to have water solubility and excellent safety, the solvent (C) for resin synthesis is considered to be optimal as a solvent for synthesizing the polyurethane resin for the PUDs. The PUDs containing the solvent (C) for resin synthesis is excellent in storage stability because the isocyanate group is protected by the stabilizer (D), and even if stored for a long period of time, it does not cause, for example, two-layer separation of a dispersion liquid or generation (gelation) of insoluble matters, and can be stored in a wide temperature range of -20°C to 80°C. In addition, since the amide group of the amide-based solvent (A) in the solvent (C) for resin synthesis has good adhesion to various substrates including rubber, plastics, and metals, the PUDs are suitably used as a steel sheet treatment agent used for various steel sheets such as hot-dip galvanized steel sheets, electrogalvanized steel sheets, hot-rolled steel sheets, and cold-rolled steel sheets, a rubber coating agent, films such as polyethylene terephthalate, polycarbonate, polyacryl, polyvinyl chloride, and polyamide, a coating agent for substrates, and a primer. The polyurethane resin produced in the present invention can have a high molecular weight, and viscosity of the PUDs prepared therefrom can be arbitrarily adjusted according to the purpose, so that the polyurethane resin can be applied to various printing modes such as inkjet printing, screen printing, flexographic printing, and gravure printing, and can be used as a binder for printing inks for textiles (textile printing), films, sheets, and the like.

The polyimide precursor solution (also referred to as the polyamic acid solution or a resin varnish) produced using the solvent (C) for resin synthesis of the present embodiment has good stability during long-term storage (transportation or storage) and during use (production of a polyimide molded body). The polyimide precursor solution obtained using the solvent (C) for resin synthesis can be used, as the binder resin, for a coating liquid for forming the polyimide molded body or a polyamide-imide molded body, the ink, an insulating protective film, a conductive ink, a photosensitive resin, the heat-resistant paint, or the like. Further, the coating liquid for forming the polyimide molded body can be used for molding a molded body such as a polyimide film, a polyimide sheet, a polyamide-imide heat-resistant coating film, a lubricating coating film, an adhesive film for metal adhesion, or a liquid crystal alignment film, for example, by forming a coating film having a desired thickness on a metal or glass substrate by a normal film forming method (spin coating method, dip coating method, solvent casting method, slot die coating method, spray coating method, roll coating method, or the like), and then subjecting the coating film to stepwise heat imidization.

The polyimide film can be produced using the solvent (C) for resin synthesis of the present embodiment. A method for producing the polyimide film is not particularly limited, and examples thereof include a method in which a coating film is formed on a metal or glass substrate using a polyimide varnish (polyimide precursor solution, partially imidized polyimide precursor solution) synthesized by using the solvent (C) for resin synthesis or a polyimide resin solution (solution of a soluble polyimide resin), and then the coating film is imidized by stepwise heat treatment at a temperature of 100°C to 500°C in a high temperature convection oven or the like. The heat treatment is performed under an inert gas atmosphere such as nitrogen at 100°C to 300°C for 10 to 60 minutes, at 300°C to 400°C for 30 to 60 minutes, and at 400°C to 500°C for 5 to 30 minutes, and preferably performed at 100°C to 150°C for 10 to 30 minutes, at 220°C to 250°C for 10 to 30 minutes, at 350°C for 30 minutes, and at 450°C for 10 minutes. The polyimide film heat-treated at such a temperature and time can remove the solvent stepwise and completely, and has high transparency and high heat resistance.

Polyimide particles can be produced using the solvent (C) for resin synthesis of the present embodiment. A method for producing the polyimide particles is not particularly limited, and examples thereof include a method in which a polyimide varnish (polyimide precursor solution, partially imidized polyimide precursor solution) synthesized using the solvent (C) for resin synthesis is heated stepwise at a temperature of 50°C to 300°C with stirring to disperse and precipitate the polyimide particles insolubilized by imidization, and a method in which a polyimide varnish synthesized using the solvent (C) for resin synthesis is added to a non-polar solvent (poor solvent) having a high boiling point and heated stepwise at a temperature of 50°C to 300°C with ultrasonic irradiation or stirring to disperse and precipitate the polyimide particles insolubilized by imidization. Examples of the non-polar solvent having a high boiling point include xylene, acetophenone, ethyl benzoate, benzyl benzoate, and tetralin. Here, the stepwise heating at 50°C to 300°C means heating at 50°C to 200°C for 30 to 120 minutes and at 200°C to 300°C for 10 to 60 minutes, and preferably heating at 70°C for 60 minutes, at 120°C for 60 minutes, and at 240°C for 30 minutes. The polyimide particles produced by these methods are preferably obtained as a powder by centrifugation or drying under reduced pressure, and then further heat-treated at 350°C for 120 minutes.

The polyimide particles obtained by the production method of the present invention have characteristics such as high heat resistance, solvent resistance (chemical resistance), and excellent electrical insulation properties as with the polyimide resin, and are widely used in high technology industries such as electric and electronic industrial fields and aerospace technical fields. For example, it is expected to be applied and developed to electric and electronic materials such as powder toner additives for image formation, coating materials of electrically insulating parts, fillers for molding, and liquid crystal spacers, and composite materials such as heat-resistant paints and lubricant additives.

By using the solvent (C) for resin synthesis of the present invention, high quality polyimide varnish, polyamide-imide varnish, polyesterimide varnish, polyetherimide varnish, polyurethane resin varnish, polyamide resin varnish,

polyacrylic resin varnish, and fluororesin varnish can be obtained. Further, by appropriately subjecting these varnishes to heat treatment and molding, high quality polyimide-based, polyamide-imide-based, polyesterimide-based, polyetherimide-based, polyurethane-based, polyamide-based, polyacryl-based, and fluorine-based resins, films, particles, and the like can be obtained. These molded bodies of resins, films, particles, and the like can be suitably used as polyimide films or polyimide sheets such as flexible electronic substrate films, copper-clad laminated films, laminated films, electrical insulating films, porous films for fuel cells, and separation films, polyimide films such as insulating films, heat resistant films, IC packages, adhesive films, liquid crystal alignment films, resist films, planarization films, microlens array films, wire coating films, and optical fiber coating films, and belt members such as drive belts and belts (for example, an intermediate transfer belt, a transfer belt, a fixing belt, and a conveying belt) for electrophotographic image forming apparatuses.

[Examples]

Hereinafter, the present invention will be described more specifically with reference to Examples and Comparative Examples, but the present invention is not limited to these Examples. In the following description, "part", "%", and "/" are all based on mass unless otherwise specified.

Materials used in Examples and Comparative Examples are as follows.

(A) Amide-based solvent

A-1: N-butyl-2-pyrrolidone
A-2: 3-methoxy-N,N-dimethylpropanamide (registered trademark "KJCMPA" manufactured by KJ Chemicals Corporation)
A-3: 3-butoxy-N,N-dimethylpropanamide (registered trademark "KJCBPA" manufactured by KJ Chemicals Corporation)
A-4: 3-lauroxy-N,N-dimethylpropanamide
A-5: 3-methoxy-N,N-diethylpropanamide
A-6: 3-ethoxy-N-phenylpropanamide
A-7: 3-methoxy-N-cyclohexylpropanamide
A-8: N,N-diethylbutanamide
A-9: N-propanoylmorpholine
A-10: 4-(3-methoxypropionyl)morpholine
A-11: N,N-diisopropylacetamide
A-12: 3-isopropoxy-N,N-dimethylpropanamide

(B) Reaction accelerator

B-1: Tributylamine
B-2: Triethylenediamine

b1-1: (Methoxyethyl)diphenylamine
b1-2: N, N-dimethyldimethoxymethanamine
b2-1: Methyl dimethylaminopropionate
b2-2: Butyl dibutylaminopropionate
b2-3: Methyl 3-methoxypropionate
b3-1: Dibutylamino-N,N-dimethylpropionic acid amide
b3-2: Morpholinopropionic acid morpholide
b3-3: Dimethylamino-N,N-dimethylpropionic acid amide
b3-4: N,N-dimethylpropionamide

(D) Stabilizers

D-1: Water
D-2: Methanol
D-3: Isopropyl alcohol
D-4: Diethylamine
D-5: Pyrrolidine

(E) Ionic liquid

E-1: Tetrabutylammonium trifluoromethanesulfonate
E-2: 1-methyl-3-propylimidazolium bis(trifluoromethanesulfonyl)imide

(F) Other Solvents

F-1: 1,3-dimethyl-2-imidazolidinone

F-2: Dimethyl sulfoxide

F-3: γ-valerolactone

F-4: γ-butyrolactone

F-5: N-formylmorpholine

F-6: 4-acetylmorpholine

F-7: Dipropylene glycol dimethyl ether

F-8: 4-methyltetrahydropyran

F-9: Cyclopentyl methyl ether

F-10: Xylene

Example 1 (Synthesis and evaluation of polyimide precursor solution)

Into a 1000 mL four-necked flask equipped with a stirring rod, a thermometer, a dropping funnel, and a nitrogen gas inlet tube, 350 g of C-1 (shown in Table 1) as a solvent and 25.0 g (125 mmol) of 4,4'-diaminodiphenyl ether (ODA) as a diamine compound were charged. The mixture was stirred at room temperature for 30 minutes while passing nitrogen gas therethrough to obtain a colorless and transparent solution, then the temperature of the solution was raised to 80°C, and 37.8 g (128 mmol) of 3,3',4,4'-biphenyltetracarboxylic dianhydride (BPDA) as an acid dianhydride was slowly added thereto while maintaining the temperature at 80°C. The mixture was further continuously stirred at 80°C for 1 hour, then cooled to room temperature, and a solvent C-1 (5 g) was added so that the solid content concentration was 15 mass%, to obtain a colorless, transparent, viscous polyimide precursor solution (varnish). The transparency and the presence or absence of coloring of the obtained varnish were visually observed, viscosity measurement and number-average molecular weight analysis of the polyimide precursor were performed by the following method, and the results were shown in Table 1. The obtained varnish was stored at 40°C for 30 days, then the viscosity was measured, the temporal viscosity change rate was calculated by the following formula, and the viscosity after storage and the temporal viscosity change rate were shown in Table 1.

$$\text{Temporal viscosity change rate (\%)} = (\text{viscosity after 30 days} - \text{initial viscosity})/\text{initial viscosity} \times 100\%$$

(Viscosity measurement)

The viscosity of the varnish was measured at 25°C according to JIS K5600-2-3 using a cone-plate viscometer (RE550 type viscometer manufactured by Toki Sangyo Co., Ltd.).

(Number average molecular weight)

High performance liquid chromatography L6000 manufactured by Hitachi, Ltd. and a data analyzer ATT-8 manufactured by Hitachi, Ltd. were used, Gelpack GL-S300MDT-5 (2 columns) was used as a column, and a solvent obtained by dissolving phosphoric acid (0.06 M) and lithium bromide (0.06 M) in a mixture of DMF/THF = 1/1 (L/L) was used as a mobile phase. The measurement was performed under the conditions of a sample concentration of 0.2% and

a flow rate of 1.0 ml/min, and the number average molecular weight was calculated with a calibration curve using a polystyrene standard sample.

Preparation and evaluation of polyimide film

The obtained polyimide precursor solution (varnish) was applied to a glass substrate, and heat treatment was performed at 120°C for 10 minutes, at 250°C for 10 minutes, and at 350°C for 30 minutes under a nitrogen stream using a hot air dryer. A laminate of a polyimide film and a glass substrate was immersed in water for 10 minutes, and the polyimide film was peeled off from the glass substrate, and dried at 80°C for 10 minutes using the hot air dryer to obtain a colorless and transparent polyimide film having a film thickness of about 10 μm. The appearance, light transmittance, strength, elongation, and linear thermal expansion coefficient of the obtained polyimide film were evaluated by the following method, and the results were shown in Table 1.

(Appearance of polyimide film)

Using the obtained polyimide film, the film was visually observed, the occurrence status of defects such as foaming and cracking was checked, and evaluation was performed according to the following criteria.

Excellent: pale yellow, transparent, without foaming or cracking

Good: pale yellow to yellow, transparent, with slight foaming or cracking

Fair: yellow or translucent, with several foams or cracks

Poor: yellow to brown or opaque, with a large number of foaming or cracking

(Transparency)

The obtained polyimide film was allowed to stand overnight under conditions of a temperature of 23°C and a relative humidity of 50%, and then the light transmittance was measured. The measurement was performed using a haze meter (NDH-2000 manufactured by Nippon Denshoku Industries Co., Ltd.) in accordance with JIS K7105. The higher the light transmittance is, the better the transparency of the polyimide film is.

(Tensile strength and tensile elongation)

The obtained polyimide film was cut into a test piece having a length of 100 mm and a width of 10 mm, and allowed to stand for 24 hours under conditions of a temperature of 23°C and a relative humidity of 50%, and then subjected to a test using a tensile tester (Tensilon RTA-100 manufactured by ORIENTEC CORPORATION) at a check interval of 50 mm, a tensile speed of 50 mm/min, and n = 5. The higher the tensile strength is, the higher the strength of the polyimide film is. Further, the higher the tensile elongation is, the higher the elongation of the polyimide film is.

(Linear thermal expansion coefficient)

The obtained polyimide film was cut into a test piece having a length of 20 mm and a width of 2 mm, and allowed to stand overnight under conditions of a temperature of 23°C and a relative humidity of 50%, and then subjected to measurement under a nitrogen stream using a thermomechanical analyzer (EXSTAR6000 manufactured by SII Nanotechnology, Inc.). The measurement method was as follows: the temperature was raised from room temperature to 220°C at a rate of 5°C/min, the temperature was lowered from 220°C to room temperature, then the temperature was raised for the second time at a rate of 5°C/min, and the average linear expansion coefficient from 50°C to 200°C was measured. The lower the average linear expansion coefficient is, the higher the heat resistance and the dimensional stability are.

Examples 2 to 12 and Comparative Examples 1 to 6

In Examples 2 to 12, a polyimide precursor solution (varnish) having a solid content concentration of 15 mass% was synthesized in the same manner as in Example 1 except for having used the diamine component, the acid dianhydride component, the solvent (C-2 to C-12), and other components described in Tables 1 and 2, and a polyimide film was further produced. The obtained varnish and film were evaluated in the same manner as in Example 1, and the results

were shown in Tables 1 and 2. Further, in Comparative Examples 1 to 6, a polyimide precursor solution (varnish) was synthesized and a polyimide film was produced, in the same manner as in Example 1 using the diamine component, the acid dianhydride component, the solvent, and other components shown in Table 3. The obtained varnish and film were evaluated in the same manner as in Example 1, and the results were shown in Table 3.

Table 1

| | | | Examples | | | | | | | | | | | |
|---|---|---|---|---|---|---|---|---|---|---|---|---|---|---|
| | | | 1 | | 2 | | 3 | | 4 | | 5 | | 6 | |
| Polyimide precursor synthesis | Raw material (mole ratio) | Diamine | ODA | 1.0 | PDA | 1.0 | ODA<br>DACH | 0.5<br>0.5 | ODA | 1.0 | PDA<br>DACH | 0.7<br>0.3 | DACH | 1.0 |
| | | Acid dianhydride | BPDA | 1.0 | BPDA | 1.0 | OPDA | 1.0 | BPDA<br>PMDA | 0.7<br>0.3 | PMDA | 1.0 | BPDA<br>OPDA | 0.5<br>0.5 |
| | Solvent (mass%) | | C-1 | | C-2 | | C-3 | | C-4 | | C-5 | | C-6 | |
| | | | A-1 | 50 | A-2 | 99, 99 | A-3 | 99.8 | A-4 | 70 | A-5 | 60 | A-6 | 75 |
| | | | B-1 | 0.0001 | b2-1 | 0.01 | b2-2 | 0.05 | b3-4 | 0.20 | b1-2 | 0.10 | A-2 | 20 |
| | | | bl-1 | 0.0001 | | | b3-1 | 0.15 | D-2 | 0.02 | b3-2 | 0.40 | b3-3 | 0.05 |
| | | | | | | | | | D-5 | 0.20 | D-4 | 0.40 | | |
| | Other solvents (mass%) | | F-1 | 29.9998 | | | | | F-1 | 29.58 | F-3 | 39.10 | F-2 | 5.05 |
| | | | F-4 | 20 | | | | | | | | | | |
| | Reaction temperature (°C) | | 80 | | 40 | | 60 | | 30 | | 45 | | 50 | |
| | Reaction time (hours) | | 1 | | 6 | | 4 | | 18 | | 8 | | 10 | |
| Precursor solution (varnish) | Appearance | | Colorless, transparent | | Colorless, transparent | | Colorless, transparent | | Colorless, transparent | | Colorless, transparent | | Colorless. transparent | |
| | Polyimide precursor molecular weight (Mn) | | 10000 | | 25000 | | 30000 | | 50000 | | 70000 | | 55000 | |
| | Viscosity (Pa·s) | | 1.20 | | 5.20 | | 6.50 | | 12.80 | | 16.60 | | 13.20 | |
| | Viscosity after storage (Pa·s) | | 1.18 | | 5.18 | | 6.46 | | 12.95 | | 16.62 | | 13.19 | |
| | Viscosity change rate (%) | | -1.67 | | -0.38 | | -0.61 | | 1.17 | | 0.12 | | 0.08 | |

(continued)

| | | Examples | | | | | |
|---|---|---|---|---|---|---|---|
| | | 1 | 2 | 3 | 4 | 5 | 6 |
| Polyimide film | Appearance | Good | Excellent | Excellent | Excellent | Excellent | Excellent |
| | Light transmittance (%) | 88 | 92 | 94 | 96 | 98 | 93 |
| | Tensile strength (MPa) | 190 | 222 | 225 | 228 | 240 | 235 |
| | Tensile elongation (%) | 88 | 95 | 102 | 96 | 92 | 98 |
| | Linear thermal expansion coefficient (ppm/°C) | 8.9 | 8.1 | 7.5 | 8.3 | 8.2 | 8.5 |

ODA: 4.4'-diaminodiphenyl ether
PDA: p-phenylenediamine
DACH: 1.4-diaminocyclohexane
BPDA: 3,3',4,4'-biphenyltetracarboxylic acid dianhydride
ODPA: 4.4'-oxydiphthalic acid anhydride
PMDA: Pyromellitic acid dianhydride

Table 2

| | | | Examples | | | | | | | | | | | |
|---|---|---|---|---|---|---|---|---|---|---|---|---|---|---|
| | | | 7 | | 8 | | 9 | | 10 | | 11 | | 12 | |
| Polyimide precursor synthesis | Raw material (mole ratio) | Diamine | ODA | 1.0 | PDA | 1.0 | DACH | 1.0 | ODA | 1.0 | PDA<br>DACH | 0.5<br>0.5 | DACH | 1.0 |
| | | Acid dianhydride | PMDA | 1.0 | BPDA<br>OPDA | 0.2<br>0.8 | OPDA | 1.0 | BPDA<br>PMDA | 0.5<br>0.5 | PMDA | 1.0 | BPDA | 1.0 |
| | Solvent (mass%) | | C-7 | | C-8 | | C-9 | | C-10 | | C-11 | | C-12 | |
| | | | A-7 | 20 | A-8 | 10 | A-9 | 30 | A-10 | 40 | A-11 | 70 | A-12 | 88 |
| | | | b2-3 | 5 | B-2 | 0.005 | b3-1 | 0.2 | b3-1 | 0.01 | b2-1 | 0.25 | b3-3 | 2 |
| | | | D-3 | 5 | E-1 | 0.005 | D-3 | 1 | D-5 | 0.02 | b3-2 | 0.75 | E-2 | 5 |
| | Other solvents (mass%) | | F-6 | 70 | F-5 | 89.99 | F-7 | 50 | F-8 | 59.97 | F-9 | 29.00 | F-3 | 5 |
| | | | | | | | F-10 | 18.8 | | | | | | |
| | Reaction temperature (°C) | | -15 | | 40 | | 25 | | 35 | | 0 | | 20 | |
| | Reaction time (hours) | | 24 | | 10 | | 18 | | 16 | | 22 | | 20 | |
| Precursor solution (varnish) | Appearance | | Colorless. transparent | | Colorless, transparent | | Colorless, transparent | | Colorless. transparent | | Colorless, transparent | | Colorless, transparent | |
| | Polyimide precursor molecular weight (Mn) | | 200000 | | 15000 | | 45000 | | 22000 | | 55000 | | 150000 | |
| | Viscosity (Pa·s) | | 22.55 | | 1.25 | | 6.80 | | 4.85 | | 8.80 | | 18.22 | |
| | Viscosity after storage (Pa·s) | | 22.45 | | 1.24 | | 6.85 | | 4.90 | | 8.83 | | 18.15 | |
| | Viscosity change rate (%) | | -0.44 | | -0.80 | | 0.74 | | 1.03 | | 0.34 | | -0.38 | |

(continued)

| | | Examples | | | | | |
|---|---|---|---|---|---|---|---|
| | | 7 | 8 | 9 | 10 | 11 | 12 |
| Polyimide film | Appearance | Excellent | Excellent | Excellent | Excellent | Excellent | Excellent |
| | Light transmittance (%) | 96 | 94 | 95 | 97 | 94 | 91 |
| | Tensile strength (MPa) | 215 | 268 | 210 | 212 | 252 | 208 |
| | Tensile elongation (%) | 125 | 90 | 65 | 105 | 90 | 88 |
| | Linear thermal expansion coefficient (ppm/°C) | 8.9 | 8.5 | 8.8 | 8.2 | 8.6 | 9.1 |

ODA: 4.4'-diaminodiphenyl ether
PDA: p-phenylenediamine
DACH: 1,4-diaminocyclohexane
BPDA: 3,3',4,4'-biphenyltetracarboxylic acid dianhydride
ODPA: 4.4'-oxydiphthalic acid anhydride
PMDA: Pyromellitic acid dianhydride

Table 3

| | | | Comparative Examples | | | | | | | | | | | |
|---|---|---|---|---|---|---|---|---|---|---|---|---|---|---|
| | | | 1 | | 2 | | 3 | | 4 | | 5 | | 6 | |
| Polyimide precursor synthesis | Raw material (mole ratio) | Diamine | ODA | 1.0 | ODA | 1.0 | ODA | 1.0 | ODA | 1.0 | ODA | 1.0 | ODA | 1.0 |
| | | Acid dianhydride | BPDA | 1.0 | BPDA | 1.0 | BPDA | 1.0 | BPDA | 1.0 | BPDA | 1.0 | BPDA | 1.0 |
| | Solvent (mass%) | | A-1 | 9 | | | | | A-1 | 100 | A-5 | 5 | | |
| | | | B-1 | 3 | B-1 | 3 | b1-1 | 0.05 | | | b2-1 | 0.1 | b3-1 | 1 |
| | | | D-2 | 6 | D-2 | 6 | D-3 | 1 | | | D-4 | 0.1 | E-1 | 20 |
| | Other solvents (mass%) | | F-1 | 50 | F-3 | 91 | F-3 | 78 | | | F-5 | 44.8 | F-4 | 79 |
| | | | F-2 | 32 | | | F-4 | 20.95 | | | F-7 | 50 | | |
| | Reaction temperature (°C) | | 80 | | 60 | | 40 | | 30 | | 50 | | 45 | |
| | Reaction time (hours) | | 1 | | 5 | | 12 | | 14 | | 8 | | 10 | |
| Precursor solution (varnish) | Appearance | | Pale yellow. cloudy | | Yellow, cloudy | | White, cloudy | | Pale yellow, cloudy | | Yellow, cloudy | | Pale yellow, cloudy | |
| | Polyimide precursor molecular weight (Mn) | | 5400 | | 60000 | | 120000 | | 8400 | | 46000 | | 1200 | |
| | Viscosity (Pa·s) | | 0.6 | | 38.5 | | 146.8 | | 0.68 | | 13.8 | | 0.23 | |
| | Viscosity after storage (Pa·s) | | 0.2 | | 8.8 | | 76.5 | | 0.28 | | 1.6 | | 0.15 | |
| | Viscosity change rate (%) | | -66.7 | | -77.1 | | -47.9 | | -58.8 | | -88.4 | | -34.8 | |
| Polyimide film | Appearance | | Poor | | Poor | | Poor | | Poor | | Poor | | Poor | |
| | Light transmittance (%) | | 62 | | 43 | | 8 | | 54 | | 38 | | 70 | |
| | Tensile strength (MPa) | | -*1 | | 108 | | 168 | | -*1 | | 88 | | -*1 | |
| | Tensile elongation (%) | | -*1 | | 45 | | 8.8 | | -*1 | | 36 | | -*1 | |
| | Linear thermal expansion coefficient (ppm/°C) | | -*1 | | 22.4 | | 18.4 | | -*1 | | 46.5 | | -*1 | |

ODA: 4,4'-diaminodiphenyl ether
BPDA: 3,3',4,4'-biphenyltetracarboxylic acid dianhydride
*1: The obtained polyimide film was brittle and could not be cut into a test piece.

As can be seen from the results of Examples and Comparative Examples shown in Tables 1 to 3, since the solvent (C) for resin synthesis according to the embodiment of the present invention contains the amide-based solvent (A) and the reaction accelerator (B), the reaction between the diamine compound and the acid dianhydride is allowed to proceed quickly and stably, and a polyimide precursor solution (varnish) having high transparency, colorless, and low viscosity can be produced. In addition, the temporal change rate of the viscosity of the obtained varnish is extremely low, and can cope with long-term storage and transportation. Furthermore, it is found that the polyimide film obtained using these varnishes has high transparency, high light transmittance, and low colorability, and is excellent in strength, elongation, heat resistance, and dimensional stability. The effect of the present invention is due to the synergistic effect of the excellent solubility of the amide-based solvent (A), which is a constituent component of the solvent (C) for resin synthesis, and the reaction acceleration by the reaction accelerator (B), and is not obtained by only the amide-based solvent (A) or a combination of the reaction accelerator (B) and other solvents.

Example 13 (Synthesis of polyamide-imide precursor solution)

A 3 L four-necked flask equipped with a stirrer, a cooling tube, a thermometer, and a nitrogen gas inlet tube was charged with 117.6 g (0.6 mol) of trimellitic anhydride (TMA), 128.8 g (0.4 mol) of 3,3',4,4'-diphenylsulfonetetracarboxylic dianhydride (DSDA), 250.2 g (1.0 mol) of 4,4'-diphenylmethane diisocyanate (MDI), and 500 g of a solvent C-13 (shown in Table 4), and the mixture was heated to 120°C with stirring and reacted at 120°C for 6 hours. After completion of the reaction, the reaction liquid was cooled to 80°C and diluted with the solvent C-13 (660 g) so as to have a solid concentration of 30 mass%, to obtain a polyamide-imide precursor solution (varnish) as a colorless and transparent solution. The viscosity of the obtained precursor solution and the number average molecular weight of the precursor were measured by the same method as described above, and the results were shown in Table 4.

Examples 14 to 24 and Comparative Examples 7 to 12

In Examples 14 to 24, a polyamide-imide precursor solution was synthesized in the same manner as in Example 13 except that an acid dianhydride component, a diisocyanate component, a solvent (C-14 to C-24), and other components described in Tables 4 and 5 were used. Further, in Comparative Examples 7 to 12, a polyamide-imide precursor solution was synthesized in the same manner as in Example 13 using an acid dianhydride component, a diisocyanate component, a solvent, and other components shown in Table 6. The viscosity of the obtained precursor solution and the number average molecular weight of the precursor were measured by the same method as described above, and the results were shown in Tables 4 to 6.

Preparation and evaluation of coating film

The obtained polyamide-imide precursor solution (varnish) was applied onto an aluminum substrate having a thickness of 1.0 mm or a copper foil as a test paint so as to have a dry film thickness of about 5 $\mu$m, preliminarily dried at 80°C for 20 minutes, and fired at 400°C for 10 minutes to obtain a coating film. Using the obtained coating film, adhesion, bending resistance, acid resistance, alkali resistance and steam resistance were evaluated, and the results were shown in Table 4 to 6.

(Adhesion)

According to JIS-K5600, 100 squares of 1 mm were formed on a coating film, and a peeling test was performed using an adhesive tape. The number of remaining squares was counted, and the adhesion was evaluated according to the following criteria.

Excellent: 100 pieces were not peeled off

Good: 95 to 99 pieces were not peeled off

Fair: 70 to 94 pieces were not peeled off

Poor: 0 to 69 pieces were not peeled off

(Bending resistance)

When the coating film (on an aluminum plate) was bent with a coating surface of the coating film facing outward,

the aluminum plate used for coating was sandwiched between the bent portions, and the bending resistance was evaluated according to the following criteria based on the number of sandwiched plates when a crack occurred in the bent portion.

Excellent: 0 plates

Good: 1 to 2 plates

Fair: 3 to 5 plates

Poor: 6 or more plates

(Acid resistance)

A test piece in which a non-coated surface of a coating film (on an aluminum plate) was protected with an adhesive tape was immersed in a 5% sulfuric acid solution, and allowed to stand at room temperature for 1 week, and then the state of the coating film was visually observed, and the acid resistance was evaluated according to the following criteria.

Good: No change

Fair: Blister observed

Poor: Coating film was peeled off

(Alkali resistance)

A test piece in which a non-coated surface of a coating film (on an aluminum plate) was protected with an adhesive tape was immersed in a 5% sodium hydroxide solution, and allowed to stand at room temperature for 1 week, and then the state of the coating film was visually observed, and the alkali resistance was evaluated according to the following criteria.

Good: No change

Fair: Blister observed

Poor: Coating film was peeled off

(Steam resistance)

A coating film (on an aluminum plate) was in contact with steam at 120°C pressurized to 2 atm in an autoclave for 100 hours, and then the adhesion was evaluated in the same manner as described above, and it was evaluated that the higher the adhesion is, the higher the steam resistance is.

Table 4

| | | | Examples | | | | | | | | | | | |
|---|---|---|---|---|---|---|---|---|---|---|---|---|---|---|
| | | | 13 | | 14 | | 15 | | 16 | | 17 | | 18 | |
| Polyamideimide precursor synthesis | Raw material (mole ratio) | Acid dianhydride | DSDA<br>TMA | 0.4<br>0.6 | TMA | 1.0 | BTDA | 1.0 | BTDA<br>TMA | 0.3<br>0.7 | TMP. | 1.0 | BTDA | 1.0 |
| | | Diisocyanate | MDI | 1.0 | MDI | 1.0 | TDI | 1.0 | MDI | 1.0 | TDI | 1.0 | MDI | 1 |
| | Solvent (mass%) | | C-13 | | C-14 | | C-15 | | C-16 | | C-17 | | C-18 | |
| | | | A-2 | 90 | A-5 | 20 | A-3 | 90 | A-4 | 60 | A-1 | 50 | A-6 | 10 |
| | | | b2-1 | 0.01 | B-1 | 5 | A-8 | 9.9998 | D-2 | 2 | b1-1 | 0.5 | b1-2 | 1 |
| | | | b3-3 | 0.005 | D-1 | 2 | b3-1 | 0.0002 | D-4 | 6 | b3-4 | 0.2 | b2-2 | 0.5 |
| | | | | | | | | | | | D-3 | 0.1 | | |
| | Other solvents (mass%) | | F-3 | 9.985 | F-1 | 30 | | | F-4 | 32 | F-5 | 49.2 | F-6 | 88.5 |
| | | | | | F-2 | 43 | | | | | | | | |
| | Reaction temperature (°C) | | 120 | | 80 | | 140 | | 90 | | 40 | | 60 | |
| | Reaction time (hours) | | 6 | | 10 | | 3 | | 8 | | 24 | | 18 | |
| Polyamideimide precursor solution (varnish) | Appearance | | Colorless. transparent | | Colorless. transparent | | Colorless, transparent | | Colorless, transparent | | Colorless, transparent | | Colorless, transparent | |
| | Solid content concentration (mass%) | | 30 | | 32 | | 26 | | 20 | | 30 | | 20 | |
| | Polyamide-imide molecular weight (Mn) | | 25000 | | 32400 | | 28600 | | 22800 | | 20500 | | 16500 | |
| | Viscosity (Pa·s) | | 1.30 | | 1.90 | | 1.50 | | 2.00 | | 1.10 | | 0.85 | |
| | Viscosity after storage (Pa·s) | | 1.31 | | 1.90 | | 1.49 | | 2.00 | | 1.11 | | 0.85 | |
| | Viscosity change rate (%) | | 0.77 | | 000 | | -0.67 | | 0.00 | | 0.91 | | 0.00 | |

(continued)

| | | | Examples | | | | | |
|---|---|---|---|---|---|---|---|---|
| | | | 13 | 14 | 15 | 16 | 17 | 18 |
| Coating film evaluation Alkali | Adhesion | Aluminum substrate | Good | Excellent | Good | Excellent | Good | Good |
| | | Copper foil | Excellent | Excellent | Excellent | Excellent | Good | Good |
| | Bending resistance | | Excellent | Excellent | Excellent | Excellent | Good | Excellent |
| | Steam resistance | | Excellent | Good | Good | Excellent | Good | Excellent |
| | Acid resistance | | Excellent | Excellent | Good | Excellent | Good | Excellent |
| | resistance Good | | | Good | Excellent | Good | Excellent | Good |

TMA: Trimellitic Acid Anhydride
BTDA: 3.3'.4.4'-benzophenone tetracarboxylic acid dianhydride
DSDA: 3,3',4.4'-diphenyl sulfone tetracarboxylic acid dianhydride
MDI: Diphenylmethane-4,4'-diisocyanate
TDI: Toluene diisocyanate

Table 5

| | | | Examples | | | | | | | | | | | |
|---|---|---|---|---|---|---|---|---|---|---|---|---|---|---|
| | | | 19 | | 20 | | 21 | | 22 | | 23 | | 24 | |
| Polyamide-imide precursor synthesis | Raw material (mole ratio) | Acid dianhydride | DSDA | 1.0 | TMA<br>BTDA | 0.5<br>0.5 | BTDA | 1.0 | BTDA<br>TMA | 0.3<br>0.7 | TMA | 1.0 | BTDA | 1.0 |
| | | Diisocyanate | MDI | 1.0 | MDI | 1.0 | MDI | 1.0 | MDI | 1.0 | MDI | 1.0 | TDI | 1 |
| | Solvent (mass%) | | C-19 | | C-20 | | C-21 | | C-22 | | C-23 | | C-24 | |
| | | | A-7 | 30 | A-8 | 20 | A-9 | 40 | A-10 | 70 | A-11 | 50 | A-12 | 75 |
| | | | b2-3 | 0.01 | b3-3 | 0.2 | b3-1 | 0.2 | b2-2 | 2 | b1-1 | 0.05 | b2-2 | 0.1 |
| | | | D-4 | 0.04 | D-5 | 1 | D-2 | 0.8 | D-3 | 10 | b3-4 | 0.05 | b3-4 | 0.2 |
| | Other solvents (mass%) | | F-7 | 69.95 | F-8 | 60 | F-5 | 50 | F-4 | 18 | F-5 | 49.9 | F-6 | 20 |
| | | | | | F-10 | 18.8 | F-9 | 9 | | | | | F-8 | 4.7 |
| | Reaction temperature (°C) | | 60 | | 70 | | 120 | | 100 | | 11 | | 80 | |
| | Reaction time (hours) | | 22 | | 16 | | 4 | | 3 | | 6 | | 14 | |
| Polyamide-imide precursor solution (varnish) | Appearance | | Colorless, transparent | | Colorless, transparent | | Colorless, transparent | | Colorless, transparent | | Colorless, transparent | | Colorless, transparent | |
| | Solid content concentration (mass%) | | 30 | | 30 | | 30 | | 30 | | 30 | | 30 | |
| | Polyamide-imide molecular weight (Mn) | | 26000 | | 28400 | | 32600 | | 28400 | | 22500 | | 26000 | |
| | Viscosity (Pa·s) | | 1.46 | | 1.65 | | 2.11 | | 2.01 | | 1.36 | | 1.58 | |
| | Viscosity after storage (Pa·s) | | 1.45 | | 1.66 | | 2.11 | | 2.01 | | 1.36 | | 1.56 | |
| | Viscosity change rate (%) | | -0.68 | | 0.61 | | 0.00 | | -0.49 | | 0.00 | | -1.26 | |

(continued)

| | | | Examples | | | | | |
|---|---|---|---|---|---|---|---|---|
| | | | 19 | 20 | 21 | 22 | 23 | 24 |
| Coating film evaluation | Adhesion | Aluminum substrate | Good | Excellent | Good | Excellent | Good | Good |
| | | Copper foil | Excellent | Excellent | Excellent | Excellent | Good | Good |
| | Bending resistance | | Excellent | Excellent | Excellent | Excellent | Good | Good |
| | Steam resistance | | Excellent | Excellent | Excellent | Excellent | Good | Good |
| | Acid resistance | | Excellent | Excellent | Excellent | Excellent | Good | Good |
| | Alkali resistance | | Good | Excellent | Excellent | Excellent | Good | Good |

TMA: Trimellitic Acid Anhydride
BTDA: 3,3',4,4'-benzophenone tetracarboxylic acid dianhydride
DSDA: 3.3',4,4'-diphenyl sulfone tetracarboxylic acid dianhydride
MDI: Diphenylmethane-4,4'-diisocyanate
TDI: Toluene diisocyanate

Table 6

| | | | Comparative Examples | | | | | | | | | | | |
|---|---|---|---|---|---|---|---|---|---|---|---|---|---|---|
| | | | 7 | | 8 | | 9 | | 10 | | 11 | | 12 | |
| Polyamide-imide precursor synthesis | Raw material (mole ratio) | Acid dianhydride | TMA | 1.0 | TMA | 1.0 | TMA | 1.0 | TMA | 1.0 | TMA | 1.0 | TMA | 1.0 |
| | | Diisocyanate | MDI | 1.0 | MDI | 1.0 | MDI | 1.0 | MDI | 1.0 | MDI | 1.0 | MDI | 1.0 |
| | Solvent (mass%) | | A-1 | 100 | A-2 | 5 | | | A-11 | 9 | A-1 | 8 | b3-3 | 1 |
| | | | | | b1-1 | 1 | b3-1 | 0.1 | B-1 | 6 | D-1 | 2 | D-4 | 5 |
| | Other solvents (mass%) | | | | F-3 | 94 | F-4 | 99.9 | F-5 | 85 | F-1 | 40 | F-4 | 94 |
| | Reaction temperature (°C) | | 120 | | 120 | | 120 | | 120 | | 120 | | 120 | |
| | Reaction time (hours) | | 6 | | 6 | | 6 | | 6 | | 6 | | 6 | |
| Polyamide-imide precursor solution (varnish) | Appearance | | Yellow, cloudy | | Pale yellow, cloudy | | Yellow, cloudy | | Pale yellow, cloudy | | Yellow, cloudy | | Yellow, cloudy | |
| | Solid content concentration (mass%) | | 30 | | 30 | | 30 | | 30 | | 30 | | 30 | |
| | Polyamide-imide molecular weight (Mn) | | 165000 | | 3400 | | 1400 | | 44800 | | 1800 | | 2500 | |
| | Viscosity (Pa·s) | | 27.80 | | 0.90 | | 0.24 | | 0.98 | | 0.17 | | 0.18 | |
| | Viscosity after storage (Pa·s) | | Varnish solidification | | 0.28 | | Precipitate generation | | 0.64 | | Precipitate generation | | Varnish solidification | |
| | Viscosity change | rate (%) | -*1 | | -71.71 | | -*1 | | -34.69 | | -*1 | | -*1 | |

(continued)

| | | | Comparative Examples | | | | | |
|---|---|---|---|---|---|---|---|---|
| | | | 7 | 8 | 9 | 10 | 11 | 12 |
| Coating film evaluation | Adhesion | Aluminum substrate | -*1 | Poor | -*1 | Poor | -*1 | -*1 |
| | | Copper foil | -*1 | Fair | -*1 | Fair | -*1 | -*1 |
| | Bending resistance | | -*1 | Poor | -*1 | Fair | -*1 | -*1 |
| | Steam resistance | | -*1 | Fair | -*1 | Fair | -*1 | -*1 |
| | Acid resistance | | -*1 | Poor | -*1 | Poor | -*1 | -*1 |
| | Alkali resistance | | -*1 | Poor | -*1 | Poor | -*1 | -*1 |

TMA: Trimellitic Acid Anhydride
MDI: Diphenylmethane-4,4'-diisocyanate
*1: The evaluation experiment could not be performed because the varnish was solidified or the precipitate was deposited.

As can be seen from the results of Examples and Comparative Examples shown in Tables 4 to 6, since the solvent (C) for resin synthesis according to the embodiment of the present invention contains the amide-based solvent (A) and the reaction accelerator (B), when the diisocyanate compound reacts with the acid dianhydride, the reaction is allowed to proceed stably, the reaction rate is high, and a polyamide-imide precursor solution (varnish) having high transparency, colorless, and low viscosity can be produced. In addition, the temporal change rate of the viscosity of the obtained varnish is extremely low, and can cope with long-term storage and transportation. Furthermore, by applying these varnishes onto a metal substrate and performing baking operation at a high temperature of 300°C to 550°C, a high-performance coating film having excellent adhesion, bending resistance, acid resistance, alkali resistance, and steam resistance can be obtained. The effect of the present invention is due to the synergistic effect of the excellent solubility of the amide-based solvent (A), which is a constituent component of the solvent (C) for resin synthesis, and the reaction acceleration by the reaction accelerator (B), and is not obtained by only the amide-based solvent (A) or a combination of the reaction accelerator (B) and other solvents. Since the coating film thus obtained has heat resistance equal to or higher than the baking temperature, various polyamide-imide precursor solutions (varnishes) obtained in the present invention can be suitably used as a heat-resistant paint.

Example 25 (Synthesis of polyurethane resin solution)

A 2 L four-necked flask equipped with a stirrer, a cooling tube, and a thermometer was charged with 150.0 g (0.05 mol) of polypropylene glycol (PPG), 100.0 g (0.05 mol) of polyester polyol (PEs), 62.6 g (0.25 mol) of 4,4'-diphenylmethane diisocyanate (MDI), and 800 g of solvent C-25 (shown in Table 7), and the mixture was heated to 70°C with stirring and reacted at 70°C for 2 hours to obtain a prepolymer. Subsequently, 9.3 g (0.15 mol) of ethylene glycol (EG) was added to the mixture, and the mixture was reacted at 60°C for 3 hours. The reaction solution was cooled to room temperature, and diluted with a solvent C-25 (490 g) so that a solid content (polyurethane resin) concentration was 25.0 mass% to obtain a polyurethane resin solution as a colorless and transparent solution. The viscosity of the obtained resin solution and the number average molecular weight of the resin were measured in the same manner as described above, and were shown in Table 7.

Examples 26 to 36 and Comparative Examples 13 to 18

Polyurethane resins in Examples 26 to 36 and Comparative Examples 13 to 18 were synthesized in the same manner as in Example 25 except that the conditions were changed to those shown in Tables 7 to 9. The viscosity of the obtained resin solution and the number average molecular weight of the resin were measured in the same manner as described above, and were shown in Tables 7 to 9.

Using the obtained polyurethane resin solution, a coating film was prepared by the following method. The tensile strength (breaking strength) and the tensile elongation (breaking elongation) of the coating film were measured by the same tensile test as described above, and were shown in Tables 7 to 9.

(Moisture permeability test and water pressure resistance test)

The obtained polyurethane resin solution was applied onto a nylon taffeta subjected to a water repellent treatment with a roll-on knife coater so that the thickness after drying was 40 μm, and solidified in water for 2 minutes. Further, the fabric was immersed in warm water at 50°C for 3 minutes to be washed, and dried at 150°C for 1 minute to obtain a moisture-permeable waterproof fabric having a polyurethane resin film. Using the obtained moisture-permeable waterproof fabric, the moisture permeability was measured according to JIS L-1099 (A-1 method), and the water pressure resistance was measured according to JIS L-1092. The measurement results were shown in Tables 7 to 9.

Table 7

| | | | Examples | | | | | | | | | | | |
|---|---|---|---|---|---|---|---|---|---|---|---|---|---|---|
| | | | 25 | | 26 | | 27 | | 28 | | 29 | | 30 | |
| Polyurethane resin synthesis | Raw material (mole ratio) | Polyol | PPG<br>PEs | 0.5<br>0.5 | PC | 1.0 | PPG<br>PC | 0.3<br>0.1 | PEs<br>PC | 0.6<br>0.4 | PPG | 1.0 | PEs | 1.0 |
| | | Diisocyanate | MDI | 2.5 | MDI | 3.5 | TDI | 2.0 | MDI | 5.5 | TDI | 2.5 | MDI | 3.5 |
| | | Chain extender | EG | 1.5 | DB | 2.6 | EG | 1.1 | DB | 4.4 | EG | 1.5 | DB | 2.6 |
| | Solvent (mass%) | | C-25 | | C-26 | | C-27 | | C-28 | | C-29 | | C-30 | |
| | | | A-1 | 99 | A-2 | 79 | A-3 | 20 | A-4 | 60 | A-5 | 99.9999 | A-6 | 10 |
| | | | B-1 | 0.50 | b1-2 | 0.80 | A-4 | 50 | b2-2 | 0.10 | b3-3 | 0.0001 | B-2 | 5 |
| | | | b1-1 | 0.50 | D-2 | 0.20 | b3-1 | 0.10 | D3-3 | 0.30 | | | D-2 | 1 |
| | | | | | | | | | | | | | D-4 | 4 |
| | Other solvents (mass%) | | | | F-1 | 20 | F-2 | 29.90 | F-4 | 39.60 | | | F-3 | 80 |
| Polyurethane resin solution | Appearance | | Colorless, transparent | | Colorless, transparent | | Colorless, transparent | | Colorless, transparent | | Colorless, transparent | | Colorless, transparent | |
| | Solid content concentration (mass%) | | 25.0 | | 25.0 | | 25.0 | | 25.0 | | 25.0 | | 25.0 | |
| | Polyurethane molecular weight (Mn) | | 120,000 | | 135,800 | | 140,600 | | 130,200 | | 165,000 | | 126,000 | |
| | Viscosity (Pa·s) | | 40.0 | | 85.0 | | 56.5 | | 82.0 | | 75.2 | | 62.5 | |
| | Viscosity after storage (Pa·s) | | 40.1 | | 85.2 | | 56.5 | | 82.2 | | 75.2 | | 62.4 | |
| | Viscosity change rate (%) | | 0.25 | | 0.23 | | 0.00 | | 0.24 | | 0.00 | | -0.16 | |

(continued)

| | | Examples | | | | | |
|---|---|---|---|---|---|---|---|
| | | 25 | 26 | 27 | 28 | 29 | 30 |
| Coating film evaluation | Tensile strength (MPa) | 20.5 | 30.2 | 28.7 | 27.5 | 24.2 | 26.4 |
| | Tensile elongation (%) | 265 | 366 | 310 | 252 | 288 | 325 |
| | Moisture permeability ($g/m^2 \cdot 24h$) | 7,500 | 10,500 | 10,200 | 8,100 | 8,800 | 9,600 |
| | Water pressure resistance ($mmH_2O$) | 7,800 | 11,000 | 11,800 | 8,800 | 8,600 | 9,900 |

PPG: Polypropylene glycol (number average molecular weight 3000. diol type)
PEs: Polyester polyol (number average molecular weight 2000. diol type. P-2010 manufactured by Kuraray Co.. Ltd.)
PC: Polycarbonate diol (number average molecular weight 2000. diol type. C-2090 manufactured by Kuraray Co.. Ltd.)
MDI: Diphenylmethane-4,4'-diisocyanate
TDI: Tolylene diisocyanate
EG: Ethylene glycol
BD: 1,4-butanediol

Table 8

| | | | Examples | | | | | | | | | | | |
|---|---|---|---|---|---|---|---|---|---|---|---|---|---|---|
| | | | 31 | | 32 | | 33 | | 34 | | 35 | | 36 | |
| Polyurethane resin synthesis | Raw material (mole ratio) | Polyol | PPG | 1.0 | PC | 1.0 | PEs | 1.0 | PC | 0.8<br>0.2 | PPG<br>Pes | 0.1<br>0.9 | PC | 1.0 |
| | | Diisocyanate | MDI | 2.2 | MDI | 2.5 | TDI | 2.0 | MDI | 1.5 | MDI | 2.1 | TDI | 2.5 |
| | | Chain extender | DB | 1.2 | EG | 1.6 | EG | 1.1 | DB | 1.4 | EG | 1.2 | EG | 1.6 |
| | Solvent (mass%) | | C-31 | | C-32 | | C-33 | | C-34 | | C-35 | | C-36 | |
| | | | A-7 | 30 | A-8 | 40 | A-9 | 50 | A-9 | 70 | A-11 | 80 | A-12 | 90 |
| | | | b2-1 | 0.20 | b2-3 | 0.08 | b3-2 | 1 | b3-4 | 0.05 | b2-3 | 0.01 | b3-4 | 3 |
| | | | D-4 | 1.00 | D-2 | 0.10 | D-5 | 0.10 | D-3 | 0.15 | b3-3 | 0.01 | D-3 | 1 |
| | | | | | D-5 | 0.30 | | | | | | | D-4 | 2 |
| | Other solvents (mass%) | | F-5 | 50 | F-6 | 59.52 | F-7 | 48.90 | F-8 | 29.8 | F-9 | 19.98 | F-10 | 5 |
| | | | F-12 | 18.8 | | | | | | | | | | |
| Polyurethane resin solution | Appearance | | Colorless, transparent | | Colorless, transparent | | Colorless, transparent | | Colorless, transparent | | Colorless, transparent | | Colorless, transparent | |
| | Solid content concentration (mass%) | | 25.0 | | 25.0 | | 25.0 | | 25.0 | | 25.0 | | 25.0 | |
| | Polyurethane molecular weight (Mn) | | 135,000 | | 144,000 | | 162,000 | | 138,000 | | 150,000 | | 160,000 | |
| | Viscosity (Pa·s) | | 43.6 | | 55.2 | | 64.8 | | 58.8 | | 75.6 | | 68.5 | |
| | Viscosity after storage (Pa-s) | | 43.6 | | 55.3 | | 64.7 | | 58.8 | | 757 | | 68.3 | |
| | Viscosity change rate (%) | | 0.00 | | 0.23 | | -0.18 | | 0.00 | | 0.13 | | -0.29 | |

(continued)

| | | Examples | | | | | |
|---|---|---|---|---|---|---|---|
| | | 31 | 32 | 33 | 34 | 35 | 36 |
| Coating film evaluation | Tensile strength (MPa) | 22.6 | 33.4 | 36.8 | 29.6 | 28.2 | 38.8 |
| | Tensile elongation (%) | 215 | 280 | 266 | 282 | 316 | 302 |
| | Moisture permeability ($g/m^2 \cdot 24h$) | 8,200 | 9,800 | 12,400 | 7,900 | 10,400 | 12,200 |
| | water pressure resistance ($mmH_2O$) | 8,100 | 9,200 | 12,000 | 8,000 | 10,600 | 11,900 |

PPG: Polypropylene glycol (number average molecular weight 3000. diol type)
PEs: Polyester polyol (number average molecular weight 2000. diol type. P-2010 manufactured by Kuraray Co., Ltd.)
PC: Polycarbonate diol (number average molecular weight 2000. diol type. C-2090 manufactured by Kuraray Co.. Ltd.)
MDI: Diphenylmethane-4,4'-diisocyanate
TDI: Tolylene diisocyanate
EG: Ethylene glycol
BD: 1,4-butanediol

Table 9

| | | | Comparative Examples | | | | | | | | | | | |
|---|---|---|---|---|---|---|---|---|---|---|---|---|---|---|
| | | | 13 | | 14 | | 15 | | 16 | | 17 | | 18 | |
| Polyurethane resin synthesis | Raw material (mole ratio) | Polyol | PPG | 1.0 | PC | 1.0 | PEs | 1.0 | PPG<br>PC | 0.5<br>0.5 | PPG<br>PEs | 0.5<br>0.5 | PC | 1.0 |
| | | Diisocyanate | MDI | 2.5 | MDI | 2.5 | TDI | 2.5 | MDI | 2.5 | MDI | 2.5 | MDI | 2.5 |
| | | Chain extender | EG | 1.6 | DB | 1.6 | EG | 1.6 | DB | 1.6 | EG | 1.5 | DB | 1.6 |
| | Solvent (mass%) | | A-1 | 100 | | | A-3 | 9.50 | | | A-1 | 50 | | |
| | | | | | B-1 | 1 | b2-1 | 0.50 | b2-2 | 2 | | | B-2 | 1 |
| | | | | | | | | | D-2 | 10 | | | D-4 | 1 |
| | Other solvents (mass%) | | | | F-1 | 99 | F-3 | 90 | F-5 | 70 | F-7 | 50 | F-4 | 98 |
| | | | | | | | | | F-10 | 18 | | | | |
| Polyurethane resin solution | Appearance | | Yellow, cloudy | | Yellow, with lumps | | Yellow, cloudy | | Yellow, cloudy | | Yellow, cloudy | | Yellow, with lumps | |
| | Solid content concentration (mass%) | | 25.0 | | 25.0 | | 25.0 | | 25.0 | | 25.0 | | 25.0 | |
| | Polyurethane molecular weight (Mn) | | 20,000 | | 8,400 | | 360,000 | | 5,600 | | 650.000 | | 260,800 | |
| | Viscosity (Pa s) | | 10.2 | | 4.5 | | 225.6 | | 8.4 | | 177.5 | | 125.0 | |
| | Viscosity after storage (Pa·s) | | 2.8 | | 1.6 | | Increased viscosity, unmeasurable | | 82.2 | | Increased viscosity, unmeasurable | | Increased viscosity, unmeasurable | |
| | Viscosity change rate (%) | | -72.50 | | -64.40 | | | | 878.57 | | | | | |

(continued)

| | | Comparative Examples | | | | | |
|---|---|---|---|---|---|---|---|
| | | 13 | 14 | 15 | 16 | 17 | 18 |
| Coating film evaluation | Tensile strength (MPa) | 12.2 | 10.5 | -*1 | 7.5 | -*1 | -*1 |
| | Tensile elongation (%) | 84 | 136 | -*1 | 22 | -*1 | -*1 |
| | Moisture permeability ($g/m^2 \cdot 24h$) | 2,600 | 1,500 | -*1 | 1,100 | -*1 | -*1 |
| | Water pressure resistance ($mmH_2O$) | 2,800 | 1,800 | -*1 | 1,300 | -*1 | -*1 |

PPG: Polypropylene glycol (number average molecular weight 3000. diol type)
PEs: Polyester polyol (number average molecular weight 2000. diol type. P-2010 manufactured by Kuraray Co.. Ltd.)
PC: Polycarbonate diol (number average molecular weight 2000. diol type, C-2090 manufactured by Kuraray Co., Ltd.)
MDI; Diphenylmethane-4,4'-diisocyanate
TDI: Tolylene diisocyanate
EG: Ethylene glycol
HD: 1,4-butanediol
*1: The evaluation experiment could not be performed because the coating film could not be formed.

As can be seen from the results shown in Table 7 to 9, since the solvent (C) for resin synthesis according to the embodiment of the present invention contains the amide-based solvent (A) and the reaction accelerator (B), the reaction between the polyol and diisocyanate is allowed to proceed stably, and a highly transparent and colorless polyurethane resin solution having a high molecular weight of the obtained polyurethane resin can be produced. In addition, the temporal change rate of the viscosity of the obtained polyurethane resin solution is extremely low, and can cope with long-term storage and transportation. Further, a coating film having high strength and high elongation can be obtained by applying these polyurethane resin solutions onto a release paper or a plastic sheet, and a water resistant product such as a moisture-permeable waterproof fabric having both moisture permeability and water resistance can be produced by applying these polyurethane resin solutions onto a nylon taffeta. The effect of the present invention is due to the synergistic effect of the excellent solubility of the amide-based solvent (A), which is a constituent component of the solvent (C) for resin synthesis, and the reaction acceleration by the reaction accelerator (B), and is not obtained by only the amide-based solvent (A) or a combination of the reaction accelerator (B) and other solvents. Further, since the polyurethane resin obtained in the present invention has excellent water resistance, various polyurethane dispersions (PUDs) can be produced by dispersing the polyurethane resin in water.

Examples 37 to 46 (lubricating paint) and Comparative Examples 19 to 24

Various varnishes (polyimide precursor solution, polyamide-imide precursor solution) obtained in Examples 1 to 24 and Comparative Examples 1 to 12 were mixed with solid lubricants and additives shown in Tables 10 and 11, and the mixture was diluted with a solvent used for each varnish so that the solid content concentration was 15 mass% to prepare a lubricating paint. Paint properties and paintability were evaluated using the prepared lubricating paints by the following methods, and the results were shown in Table 10. In addition, a lubricating coating film was prepared from a lubricating paint by the following method to evaluate abrasion resistance and adhesion, and the results were shown in Tables 10 and 11. Note that in the tables, "$MoS_2$" represents molybdenum disulfide (Mori Powder PS manufactured by Sumico Lubricant Co., Ltd., density 4.8 g/cm$^3$), "PTFE" represents polytetrafluoroethylene (CEFRAL LUBE, manufactured by Central Glass Co., Ltd.), "graphite" represents scale-like graphite W-5 (manufactured by Ito Graphite Co., Ltd., density 2.2 g/cm$^3$), and "epoxy resin" represents a novolak type epoxy resin (Epikote 152 manufactured by Yuka Shell K.K.).

(Paint properties)

For the prepared lubricating paint, the dispersion state of the solid lubricant and the presence or absence of aggregation of the resin varnish (polyimide varnish, polyamide-imide varnish) were visually checked, and evaluation was performed according to the following criteria.
Excellent: No aggregates are found in the lubricating paint in the mixing process and after the preparation, and the resin varnish is dissolved and homogeneous (practical level).
Good: Although the solid lubricant is not uniformly dispersed in the mixing process, there is no aggregate finally in the lubricating paint, and the resin varnish is dissolved and homogeneous (practical level).
Poor: The resin varnish in the lubricating paint in the mixing process or after preparation causes gelation by aggregation.

(Paintability)

Using the prepared lubricating paint, a coating film having a thickness of 10 μm was applied to the surface of a SUS316 disk (diameter 100 mm, thickness 5 mm) by a spray painting method. The state of the painted surface was visually checked, and evaluation was performed according to the following criteria.
Good: The painted surface is uniform and good (practical level).
Poor: The painted surface is not uniform, and there are undulations and unevenness.

(Sliding properties (abrasion resistance))

Using the prepared lubricating paint, the surface of a SUS 316 disk (diameter 100 mm, thickness 5 mm) preheated to 90°C was spray-painted so that the coating film had a thickness of 10 μm. Thereafter, the disk was dried at 100°C for 10 minutes and at 200°C for 10 minutes, and further heated at 400°C for 1 hour to obtain a coating film test piece, and a reciprocating sliding wear test was performed using a steel ball (SUJ2) as a mating material. The sliding test conditions were 15 mm/s and 100 cycles. After the sliding test, the wear depth of the coating film was measured, and evaluation was performed according to the following criteria.
Excellent: The wear depth of the most worn portion is 3 μm or less (practical level).

Good: The wear depth of the most worn portion is more than 3 μm and 5 μm or less (practical level).
Fair: The wear depth of the most worn portion is more than 5 μm and 7 μm or less (practical level).
Poor: The wear depth of the most worn portion is 7 μm or more.

(Adhesion)

The prepared lubricating paint was spray-painted on the surface of a SUS316 plate (length 50 mm × width 50 mm, thickness 5 mm) with the painting conditions fixed so that the coating film had a thickness of 10 μm. The painted surface was dried at 100°C for 10 minutes and at 200°C for 10 minutes, and further heated at 400°C for 1 hour to form a coating film. According to JIS-K5600, 100 squares of 1 mm were formed on a coating film, and a peeling test was performed using an adhesive tape. The number of remaining squares was counted, and the adhesion was evaluated according to the following criteria.

Excellent: 100 pieces were not peeled off

Good: 95 to 99 pieces were not peeled off

Fair: 70 to 94 pieces were not peeled off

Poor: 0 to 69 pieces were not peeled off

Table 10

| | | Examples | | | | | | | | | |
|---|---|---|---|---|---|---|---|---|---|---|---|
| | | 37 | 38 | 39 | 40 | 41 | 42 | 43 | 44 | 45 | 46 |
| Resin varnish | Type | Example 2 | Example 3 | Example 4 | Example 5 | Example 13 | Example 14 | Example 15 | Example 16 | Example 20 | Example 22 |
| | parts by mass | 65 | 70 | 70 | 70 | 65 | 70 | 20 | 65 | 70 | 70 |
| Solid lubricant | Type | $MoS_2$ | PTFE | Graphite | $MoS_2$ | PTFE | Graphite | $MoS_2$ | PTFE | Graphite | $MoS_2$ |
| | parts by mass | 30 | 30 | 30 | 30 | 30 | 30 | 30 | 30 | 30 | 30 |
| Additive | Type | Epoxy resin | | | | Epoxy resin | | | Epoxy resin | | |
| | parts by mass | 5 | | | | 5 | | | 5 | | |
| Lubricating paint | Paint properties | Excellent | Excellent | Excellent | Excellent | Excellent | Excellent | Excellent | Excellent | Excellent | Excellent |
| | Paintability | Good | Good | Good | Good | Good | Good | Good | Good | Good | Good |
| Lubricating coating film | Abrasion resistance | Excellent | Excellent | Excellent | Excellent | Excellent | Excellent | Excellent | Excellent | Excellent | Excellent |
| | Adhesion | Excellent | Excellent | Excellent | Excellent | Excellent | Excellent | Excellent | Excellent | Excellent | Excellen* |

Table 11

| | | Comparative Examples | | | | | |
|---|---|---|---|---|---|---|---|
| | | 19 | 20 | 21 | 22 | 23 | 24 |
| Resin varnish | Type | Comparative Example 2 | Comparative Example 3 | Comparative Example 5 | Comparative Example 6 | Comparative Example 8 | Comparative Example 10 |
| | parts by mass | 65 | 70 | 70 | 70 | 65 | 70 |
| Solid lubricant | Type | $MoS_2$ | PTFE | Graphite | $MoS_2$ | PTFE | Graphite |
| | parts by mass | 30 | 30 | 30 | 30 | 30 | 30 |
| Additive | Type | Epoxy resin | | | | Epoxy esin | |
| | parts by mass | 5 | | | | 5 | |
| Lubricating paint | Paint properties | Poor | Poor | Poor | Poor | Poor | Poor |
| | Paintability | Poor | Poor | Poor | Poor | Poor | Poor |
| Lubricating coating film | Abrasion resistance | Poor | Fair | Poor | Poor | Poor | Fair |
| | Adhesion | Poor | Poor | Fair | Poor | Poor | Poor |

Examples 47 to 52 (adhesive) and Comparative Examples 25 to 28

Using a tabletop coating machine (CoaterTC-1 manufactured by Mitsui Electric Co., Ltd.), various varnishes (polyimide precursor solution, polyamide-imide precursor solution) obtained in Examples 1 to 24 and Comparative Examples 1 to 12 were applied to one surface of a polyimide film (Kapton ENS manufactured by DuPont de Nemours, Inc., length × width × thickness = 200 mm × 300 mm × 25 μm) with a bar coater (#15 manufactured by RDS Co., Ltd.) so as to have a thickness of 35 μm after drying, and dried at 100°C for 10 minutes and at 200°C for 10 minutes to obtain a cover lay film having an adhesive layer thickness of 35 μm. The obtained cover lay film (adhesive layer side) was placed on a copper foil from which the rustproof metal layer on the surface had been removed (polyimide film/adhesive layer/copper foil), pressed under conditions of a temperature of 400°C, a pressure of 1MPa, and a time of 1 minute, and then heated in an oven under conditions of a temperature of 400°C and a time of 24 hours to obtain a laminate having a three-layer structure of polyimide film/adhesive layer/copper foil.

A polyimide copper-clad laminate (ESPANEX MC18-25-00FRM manufactured by Nippon Steel Chemical Co., Ltd) was subjected to circuit processing to prepare a printed circuit board on which a circuit having a wiring width/wiring interval (L/S) = 1 mm/1 mm was formed, and the cover lay film (adhesive layer side) was placed on a circuit surface of the printed circuit board (polyimide film/adhesive layer/printed circuit board/adhesive layer/polyimide film), pressed under conditions of a temperature of 400°C, a pressure of 1MPa, and a time of 1 minute, and then heated in an oven under conditions of a temperature of 400°C and a time of 24 hours to obtain a wiring board (laminate having five-layer structure of polyimide film/adhesive layer/printed circuit board/adhesive layer/polyimide film) provided with a cover lay film.

The adhesive strength of the obtained laminate was measured by the following method, and evaluated according to the following criteria, and the results were shown in Table 12. In addition, the solder heat resistance (drying and moisture resistance) of the obtained wiring board was evaluated by the following method, and the results were shown in Table 12.

(Adhesive strength)

The laminate was cut into a test piece having a width of 10 mm and a length of 100 mm, the polyimide film and the copper foil were peeled off at a rate of 50 mm/min in a 180° direction using a tensile tester (Strograph-M1 manufactured by Toyo Seiki Seisaku-sho, Ltd.), the peeling strength was defined as adhesive strength, and evaluation was performed according to the following criteria.

Excellent: 0.35 kN/m or more

Good: 0.2 kN/m or more and less than 0.35 kN/m

Poor: less than 0.2 kN/m

(Solder heat resistance (drying))

The obtained wiring board was allowed to stand for 1 hour in a constant temperature and humidity bath at a temperature of 105°C and a relative humidity of 50%, then immersed in a heated solder bath for 10 seconds, and the adhesion state was observed to check the presence or absence of defects such as foaming, blistering, and peeling, and evaluation was performed according to the following criteria.

Good: There are no defects such as foaming, blistering, and peeling even at a solder bath temperature of 300°C.

Poor: There are defects such as foaming, blistering, and peeling at a solder bath temperature of less than 300°C.

(Solder heat resistance (moisture resistance))

The obtained wiring board was allowed to stand for 24 hour in a constant temperature and humidity bath at a temperature of 85°C and a relative humidity of 85%, then immersed in a heated solder bath for 10 seconds, and the adhesion state was observed to check the presence or absence of defects such as foaming, blistering, and peeling.

Good: There are no defects such as foaming, blistering, and peeling even at a solder bath temperature of 280°C.

Poor: There are defects such as foaming, blistering, and peeling at a solder bath temperature of less than 280°C.

Table 12

| | | Examples | | | | | | Comparative Examples | | | |
|---|---|---|---|---|---|---|---|---|---|---|---|
| | | 47 | 48 | 49 | 50 | 51 | 52 | 25 | 26 | 27 | 28 |
| Resin varnish | Type | Example 2 | Example 3 | Example 4 | Example 13 | Example 14 | Example 15 | Comparative Example 2 | Comparative Example 3 | Comparative Example 6 | Comparative Example 8 |
| Laminate | Adhesive trength | Excellent | Excellent | Excellent | Excellent | Excellent | Excellent | Poor | Poor | Poor | Poor |
| Wiring board | Solder heat resistance (drying) | Good | Good | Good | Good | Good | Good | Poor | Poor | Poor | Poor |
| | Solder heat resistance (moisture resistance) | Good | Good | Good | Good | Good | Good | Poor | Poor | Poor | Poor |

Examples 53 to 58 (photosensitive resin) and Comparative Examples 29 to 32

The various varnishes (polyimide precursor solutions) obtained in Examples 1 to 12 and Comparative Examples 1 to 6 were weighed so as to have a solid content of 10 g, and 1.6 g of 1,2-naphthoquinonediazide-5-sulfonic acid ester of α,α,α'-tris(4-hydroxyphenyl)-1-ethyl-4-isopropylbenzene (TS150-A manufactured by Toyo Gosei Co., Ltd.) as a quinone diazide compound and 0.42 g of WPAG-567 (manufactured by FUJIFILM Wako Pure Chemical Corporation) as a photoacid generator were added to obtain a photosensitive polyimide precursor composition. The obtained photosensitive polyimide precursor composition was applied onto a 6 inch silicon wafer so that the film thickness after prebaking was 14 to 16 μm, and prebaked at 120°C for 2 minutes using a hot plate (Coater/Developer Mark-7 manufactured by Tokyo Electron Limited) to obtain a photosensitive resin film. Subsequently, a patterned reticle was set in an exposure machine (i-line stepper DSW-8000 manufactured by GCA Corporation), and a photosensitive resin film obtained by changing the exposure time at an intensity of 365 nm was exposed to i-line (365 nm) of a mercury lamp. Using a developing device of Mark-7 manufactured by Tokyo Electron Limited, a 2.38% aqueous solution of tetramethylammonium hydroxide was sprayed onto the exposed film at 50 rotations for 10 seconds. Thereafter, the film was allowed to stand at 0 rotation for 40 seconds, sprayed again for 10 seconds, allowed to stand for 40 seconds, rinsed with water at 400 rotations, and dried by shaking off at 3000 rotations for 10 seconds to obtain a photosensitive resin film after development. Using Inert Oven INH-21CD manufactured by Koyo Thermo Systems Co., Ltd., the photosensitive resin film after development was heated at 140°C for 30 minutes under a nitrogen stream (oxygen concentration: 20 ppm or less), then heated to 350°C in 1 hour, and then heated at 350°C for 1 hour to produce a cured film.

The storage stability of the obtained photosensitive polyimide precursor composition, the sensitivity and resolution in pattern processing, the shrinkage ratio of the film thickness before and after heat treatment, and adhesive properties of the cured film were evaluated by the following methods, and the results were shown in Table 13.

(Storage stability)

After the preparation of the photosensitive polyimide precursor composition, the absolute value of the difference between the optimal exposure time of the quickly pattern-processed product and the optimal exposure time of the pattern-processed product after being allowed to stand at 23°C for 2 weeks was calculated and evaluated according to the following criteria.

Excellent: Absolute value of the difference is 100 msec or less

Good: Absolute value of the difference is more than 100 msec and 200 msec or less

Poor: Absolute value of the difference is more than 200 msec

(Sensitivity)

After exposure and development, the exposure time (optimal exposure time) at which a 50 μm line-and-space pattern (1L/1S) was formed with a width of 1:1 was determined and evaluated according to the following criteria. The shorter the optimal exposure time is, the higher the sensitivity is.

Excellent: Optimal exposure time is 700 msec or less

Good: Optimal exposure time is more than 700 msec and 800 msec or less

Poor: Optimal exposure time is more than 800 msec

(Resolution)

After exposure and development, the minimum pattern dimension at the optimal exposure time was measured and evaluated according to the following criteria. The smaller the minimum pattern dimension is, the higher the resolution is.

Excellent: Smallest pattern dimension is 5 μm or less

Good: Smallest pattern dimension is more than 5 μm and 10 μm or less

Poor: Smallest pattern dimension is more than 10 μm

(Shrinkage ratio)

Using Lambda Ace STM-602 manufactured by Dainippon Screen Mfg. Co., Ltd., the film thickness (refractive index 1.629) of the photosensitive resin film after development and the film thickness (refractive index 1.773) of the cured film were measured, and the shrinkage ratio of the film thickness was calculated according to the following formula and evaluated according to the following criteria.

Shrinkage ratio (%) = (film thickness after development - film thickness after curing)/film thickness after development ×100

Excellent: Shrinkage ratio is 25% or less

Good: Shrinkage ratio is more than 25% and 30% or less

Poor: Shrinkage is more than 30%.

(Adhesive properties)

The photosensitive polyimide precursor composition was applied onto a silicon substrate so that the film thickness after prebaking was 10 μm, and prebaked at 120°C for 2 minutes using a hot plate (Coater/Developer Mark-7 manufactured by Tokyo Electron Limited). Thereafter, heat treatment was performed at 170°C for 30 minutes and at 350°C for 1 hour in an air atmosphere to obtain a polyimide film. The polyimide film was subjected to a pressure cooker test (PCT) treatment under saturation conditions of 120°C and 2 atm for 400 hours, 100 squares of 2 mm were then prepared, and a peeling test was performed using an adhesive tape. The number of peeled squares was counted, and adhesive properties were evaluated according to the following criteria.

Good: The number of peelings is less than 30

Poor: The number of peelings is 30 or more

Table 13

| | | Examples | | | | | | Comparative Examples | | | |
|---|---|---|---|---|---|---|---|---|---|---|---|
| | | 53 | 54 | 55 | 56 | 57 | 58 | 29 | 30 | 31 | 32 |
| Polyimide varnish | Type | Example 2 | Example 3 | Example 5 | Example 7 | Example 8 | Example 10 | Comparative Example 1 | Comparative Example 2 | Comparative Example 3 | Comparative Example 5 |
| Photosensitive polyimide precursor composition | Storage stability | Excellent | Excellent | Excellent | Excellent | Excellent | Excellent | Poor | Poor | Poor | Poor |
| Pattern processability | Sensitivity | Excellent | Excellent | Excellent | Excellent | Excellent | Excellent | Poor | Poor | Poor | Poor |
| | Resolution | Excellent | Excellent | Excellent | Excellent | Excellent | Excellent | Poor | Poor | Poor | Poor |
| Cured film | Shrinkage ratio (%) | Excellent | Excellent | Excellent | Excellent | Excellent | Excellent | Poor | Poor | Poor | Poor |
| | Adhesive properties | Good | Good | Good | Good | Good | Good | Poor | Poor | Poor | Poor |

Examples 59 to 64 (ink composition) and Comparative Examples 33 to 36

Various varnishes (polyimide precursor solution, polyamide-imide precursor solution) obtained in Examples 1 to 24 and Comparative Examples 1 to 12 were directly used as ink compositions, and warpage after printing (application, drying), solvent resistance, plating resistance, flame retardancy, and printability were evaluated by the following methods, and were shown in Table 14.

(Warpage)

Various varnishes were applied onto a copper foil having a size of length × width thickness = 50 mm × 50 mm × 13 μm such that the film thickness after drying was 10 μm. Thereafter, the copper foil was heated and dried in an oven under conditions of a temperature of 400°C and a time of 30 minutes to obtain a laminate in which a polyimide resin layer or a polyamide-imide resin layer was laminated on the copper foil (substrate). The average value of an amount of warpage at four corners of the laminate was obtained and evaluated according to the following criteria.

Excellent: Average value of amount of warpage is 1 mm or less

Good: Average value of amount of warpage is more than 1 mm and 2 mm or less

Poor: Average value of amount of warpage is more than 2 mm

(Solvent resistance test)

Each of the laminates (substrate: copper foil) obtained in the above (warpage) test was immersed in a solvent shown in Table 14 at room temperature for 5 minutes, and the state of the surface (resin layer) was visually observed and evaluated according to the following criteria.

Excellent: No change

Good: Roughness or dissolution is observed on a part of the surface

Poor: Dissolution

(Plating resistance)

Each of the laminates (substrate: copper foil) obtained in the above (warpage) test was subjected to electroless gold plating in the following steps to obtain a test piece. Specifically, the laminate was sequentially immersed in the tank of each step and then dried. The surface state of the obtained test piece was visually observed and evaluated according to the following criteria.

(Electroless gold plating steps)

degreasing treatment (acid degreasing = acid treatment), water washing, soft etching, water washing, desmear treatment,

palladium chloride catalysis, nickel (nickel nitrate) plating,

gold (gold potassium cyanide) plating, water washing, drying

(Evaluation criteria)

Excellent: No change

Good: There is damage near the end portion

Poor: Plating is attached to the surface in a granular manner

(Flame retardancy)

Various varnishes were applied onto a polyimide film (Kapton 100H manufactured by DU PONT-TORAY CO., LTD., thickness 25 μm) so that the film thickness after drying was 10 μm. Thereafter, the laminate was heated and dried in an oven under conditions of a temperature of 400°C and a time of 30 minutes to obtain a laminate (substrate: polyimide film) in which a polyimide resin layer or a polyamide-imide resin layer was laminated on the polyimide film (substrate). Flame retardancy of the obtained laminate was evaluated according to the following burning classification in accordance with the vertical burning test (VTM) of the UL94 film material.

Excellent: V-0

Good: V-1

Poor: V-2

(Printability)

Various varnishes were printed on a polyimide film (Kapton 100H manufactured by DU PONT-TORAY CO., LTD., thickness 25 μm) with a line-and-space pattern having a line width of 500 μm and a space of 500 μm through a stainless steel metal mask having a thickness of 100 μm. Specifically, a metal mask was placed on a polyimide film and brought into close contact with the polyimide film, various varnishes were spread thereon, and the opening of the metal mask was filled with a liquid using a fluororesin spatula, then the excess liquid was removed, and printing was performed by a method of slowly removing the metal mask. After the printing, the substrate was rapidly held in a constant temperature and humidity bath at a humidity of about 100% and a temperature of 50°C for 8 minutes, and further heated in an oven under conditions of a temperature of 400°C and a time of 30 minutes to obtain a laminate (substrate: polyimide film) in which a polyimide resin layer or a polyamide-imide resin layer having a thickness of 15 to 20 μm was laminated on a polyimide film (substrate). The printability of the obtained laminate was evaluated according to the following criteria.

Excellent: No bleeding or blurring in the pattern.

Good: The pattern can be recognized, but there is slight bleeding or blurring.

Poor: There is bleeding or blurring to such an extent that the pattern cannot be recognized.

Table 14

| | | | Examples | | | | | | Comparative Examples | | | |
|---|---|---|---|---|---|---|---|---|---|---|---|---|
| | | | 59 | 60 | 61 | 62 | 63 | 64 | 33 | 34 | 35 | 36 |
| Resin varnish | Type | | Example 2 | Example 3 | Example 8 | Example 13 | Example 14 | Example 15 | Comparative Example 1 | Comparative Example 6 | Comparative Example 8 | Comparative Example 9 |
| Laminate (substrate: copper foil) | Warpage | | Excellent | Excellent | Excellent | Excellent | Excellent | Excellent | Poor | Poor | Poor | Poor |
| | Solvent resistance | Ethanol | Excellent | Excellent | Excellent | Excellent | Excellent | Excellent | Poor | Poor | Poor | Poor |
| | | Acetone | Excellent | Excellent | Excellent | Excellent | Excellent | Excellent | Poor | Poor | Poor | Poor |
| | | 10% $H_2SO_4$ | Excellent | Excellent | Excellent | Excellent | Excellent | Excellent | Poor | Poor | Poor | Poor |
| | | 10% HCl | Excellent | Excellent | Excellent | Excellent | Excellent | Excellent | Poor | Poor | Poor | Poor |
| | | 10% NaOH | Excellent | Excellent | Excellent | Excellent | Excellent | Excellent | Poor | Poor | Poor | Poor |
| | Plating resistance | | Excellent | Excellent | Excellent | Excellent | Excellent | Excellent | Poor | Poor | Poor | Poor |
| Laminate (substrate: polyimide film) | Flame retardancy | | Excellent | Excellent | Excellent | Excellent | Excellent | Excellent | Poor | Poor | Poor | Poor |
| | Printability | | Excellent | Excellent | Excellent | Excellent | Excellent | Excellent | Poor | Poor | Poor | Poor |

As can be seen from the results of Examples and Comparative Examples shown in Tables 10 to 14, the polyimide precursor and the polyamide-imide precursor synthesized using the solvent (C) for resin synthesis containing the amide-based solvent (A) and the reaction accelerator (B), which is the embodiment of the present invention, have low viscosity, high transparency, and high stability while having a high molecular weight, and these precursor solutions (resin varnishes) are obtained. Such resin varnishes can be suitably used as various binder resins for a lubricating coating film (lubricating paint), an adhesive, a photosensitive resin, or an ink composition.

INDUSTRIAL APPLICABILITY

As described above, the solvent (C) for resin synthesis according to the embodiment of the present invention contains the amide-based solvent (A) and the reaction accelerator (B), and can be suitably used for synthesis of a polyimide-based copolymer including polyimide, polyamide-imide, polyesterimide, any precursor thereof, and/or two or more precursors selected therefrom, and a polyurethane resin. A resin varnish such as a polyimide varnish, a polyamide-imide varnish, or a polyurethane resin varnish produced using a solvent for resin synthesis according to the embodiment of the present invention is suitably used as a binder resin for various applications, and a polyimide film obtained by molding exhibits excellent physical properties, and can be suitably used as a surface protective film or an interlayer insulating film of a semiconductor element, an insulating layer or a spacer layer of an organic EL element, a flattening film of a thin-film transistor substrate, an insulating film of an organic transistor, a flexible printed substrate, a flexible device substrate, a liquid crystal display substrate, an organic EL display substrate, an electronic paper substrate, and a substrate as a light receiving device such as a thin-film solar cell substrate, and further as an electrode binder of a lithium ion secondary battery, a semiconductor adhesive, and the like. In addition, the polyimide precursor produced using the solvent for resin synthesis according to the embodiment of the present invention has excellent solubility for soluble polyimide, and thus is suitably used for producing a liquid crystal aligning agent.

## Claims

1. A solvent (C) for resin synthesis, comprising:

   10 to 99.9999 mass% of an amide-based solvent (A); and
   0.0001 to 5 mass% of a reaction accelerator (B), wherein
   the reaction accelerator (B) is an aliphatic or aromatic tertiary amine compound having one or more tertiary amino groups in a molecule of the reaction accelerator (B).

2. The solvent (C) for resin synthesis according to claim 1, wherein the amide-based solvent (A) is an alkoxy-N-substituted propanamide represented by a general formula (1).

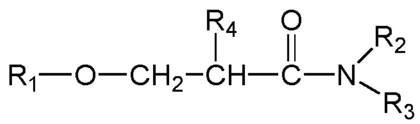

General Formula (1)

(In the formula, $R_1$ to $R_3$ each independently represent a linear alkyl group having 1 to 22 carbon atoms, a branched alkyl group having 3 to 22 carbon atoms, an alkyl ether group having 2 to 22 carbon atoms, an alicyclic hydrocarbon group having 3 to 22 carbon atoms, or an aromatic hydrocarbon group having 6 to 22 carbon atoms, and $R_4$ represents a hydrogen atom or a methyl group. Further, $R_2$ and $R_3$ each independently include a hydrogen atom (except for a case of being a hydrogen atom at the same time) or one that forms a saturated 5- to 7-membered ring (including one having an oxygen atom) together with a nitrogen atom carrying them.)

3. The solvent (C) for resin synthesis according to claim 1 or 2, wherein the reaction accelerator (B) is an aliphatic or aromatic tertiary amine compound having one or more tertiary amino groups in the molecule and further having one or more functional groups selected from an ether group, an ester group, and an amide group in the molecule, represented by a general formula (2).
(In the formula, A, B, and C each independently represent a linear alkyl group having 1 to 22 carbon atoms, a branched alkyl group, an alkyl ether group, an alkyl ester group, or an alkylamide group, having 3 to 22 carbon

atoms, an alicyclic hydrocarbon group having 3 to 22 carbon atoms, an aromatic hydrocarbon group having 6 to 22 carbon atoms, a substituent having an ether group represented by a general formula (3), a substituent having an ester group represented by a general formula (4), or a substituent having an amide group represented by a general formula (5) (In the formula, $R_5$, $R_7$, and $R_8$ each represent a linear alkylene having 1 to 22 carbon atoms, a branched alkylene group or alkylene ether group having 3 to 22 carbon atoms, an alicyclic hydrocarbon group having 3 to 22 carbon atoms, or an aromatic hydrocarbon group having 6 to 22 carbon atoms. Rs, Re, $R_{10}$, and $R_{11}$ each represent a linear alkyl group having 1 to 22 carbon atoms, a branched alkyl group, an alkyl ether group, an alkyl ester group, or an alkylamide group, having 3 to 22 carbon atoms, an alicyclic hydrocarbon group having 3 to 22 carbon atoms, or an aromatic hydrocarbon group having 6 to 22 carbon atoms. Further, $R_{10}$ and $R_{11}$ may each independently be a hydrogen atom, and may be one that forms a saturated 5- to 7-membered ring (including one having an oxygen atom) together with a nitrogen atom carrying them.).)

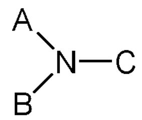

General Formula (2)

$$-R_5-O-R_6$$

General Formula (3)

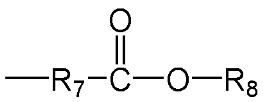

General Formula (4)

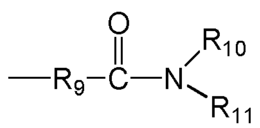

General Formula (5)

**4.** The solvent (C) for resin synthesis according to any one of claims 1 to 3, further comprising a stabilizer (D) and/or an ionic liquid, wherein
the stabilizer (D) is a compound having active hydrogen in a molecule of the stabilizer (D).

**5.** The solvent (C) for resin synthesis according to any one of claims 1 to 4, wherein the solvent (C) is used for synthesizing a polyimide precursor, a polyamide-imide precursor, a polyesterimide precursor, a polyetherimide precursor, a polyimide resin, a polyamide-imide resin, a polyesterimide resin, a polyetherimide resin, a polyimide-based copolymer resin including any two or more selected from the various precursors, a polyamide resin, a polyurethane resin, a polyester resin, a polyacrylic resin, and a fluororesin.

**6.** A method for producing a polyimide precursor and a polyamide-imide precursor, comprising mixing and polymerizing an acid dianhydride with a diamine and/or a diisocyanate using the solvent (C) for resin synthesis according to any one of claims 1 to 5, and a method for producing a polyimide, comprising heat-imidizing the precursors.

**7.** A method for producing a polyurethane, comprising mixing and polymerizing a polyol and a diisocyanate using the solvent (C) for resin synthesis according to any one of claims 1 to 5, and a method for producing a polyurethane dispersion, comprising dispersing the polyurethane in water.

**8.** A polyurethane dispersion comprising the solvent (C) for resin synthesis according to any one of claims 1 to 5.

9. A resin varnish comprising the solvent (C) for resin synthesis according to any one of claims 1 to 5, the resin varnish being anyone selected from a polyimide varnish, a polyamide-imide varnish, a polyesterimide varnish, a polyetherimide varnish, a polyurethane resin varnish, a polyamide resin varnish, a polyacrylic resin varnish, and a fluororesin varnish.

10. A binder resin comprising:

    the solvent (C) for resin synthesis according to any one of claims 1 to 5; and
    at least one resin varnish selected from a polyimide varnish, a polyamide-imide varnish, a polyesterimide varnish, a polyetherimide varnish, a polyurethane resin varnish, a polyamide resin varnish, a polyacrylic resin varnish, and a fluororesin varnish.

11. An ink composition comprising:

    the solvent (C) for resin synthesis according to any one of claims 1 to 5; and
    at least one resin varnish selected from a polyimide varnish, a polyamide-imide varnish, a polyesterimide varnish, a polyetherimide varnish, a polyurethane resin varnish, a polyamide resin varnish, a polyacrylic resin varnish, and a fluororesin varnish.

12. A photosensitive resin composition comprising:

    the solvent (C) for resin synthesis according to any one of claims 1 to 5; and
    at least one resin varnish selected from a polyimide varnish, a polyamide-imide varnish, a polyesterimide varnish, a polyetherimide varnish, a polyurethane resin varnish, a polyamide resin varnish, a polyacrylic resin varnish, and a fluororesin varnish.

13. An adhesive resin composition comprising:

    the solvent (C) for resin synthesis according to any one of claims 1 to 5; and
    at least one resin varnish selected from a polyimide varnish, a polyamide-imide varnish, a polyesterimide varnish, a polyetherimide varnish, a polyurethane resin varnish, a polyamide resin varnish, a polyacrylic resin varnish, and a fluororesin varnish.

14. A resin composition for a lubricating coating film, comprising:

    the solvent (C) for resin synthesis according to any one of claims 1 to 5; and
    at least one resin varnish selected from a polyimide varnish, a polyamide-imide varnish, a polyesterimide varnish, a polyetherimide varnish, a polyurethane resin varnish, a polyamide resin varnish, a polyacrylic resin varnish, and a fluororesin varnish.

15. A heat-resistant paint comprising:

    the solvent (C) for resin synthesis according to any one of claims 1 to 5; and
    at least one resin varnish selected from a polyimide varnish, a polyamide-imide varnish, a polyesterimide varnish, a polyetherimide varnish, and a fluororesin varnish.

## INTERNATIONAL SEARCH REPORT

International application No.
**PCT/JP2021/033063**

**A. CLASSIFICATION OF SUBJECT MATTER**

***C08G 73/10***(2006.01)i; ***C08G 18/65***(2006.01)i
FI: C08G73/10; C08G18/65

According to International Patent Classification (IPC) or to both national classification and IPC

**B. FIELDS SEARCHED**

Minimum documentation searched (classification system followed by classification symbols)

C08G73/10; C08G18/65

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X | JP 2000-345028 A (HITACHI CHEM CO LTD) 12 December 2000 (2000-12-12) claims, paragraphs [0017]-[0021], [0027] | 1, 3, 5, 10, 13 |
| A | | 2, 4, 6-9, 11-12, 14-15 |
| X | WO 2018/066522 A1 (JXTG NIPPON OIL & ENERGY CORP) 12 April 2018 (2018-04-12) examples | 1, 5-6, 9-10 |
| A | | 2-4, 7-8, 11-15 |
| X | JP 63-21917 A (KOORON:KK) 29 January 1988 (1988-01-29) examples | 1, 5 |
| A | | 2-4, 6-15 |
| X | JP 2019-528368 A (DAELIM CORP CO LTD) 10 October 2019 (2019-10-10) claims, paragraphs [0009], [0047] | 1-2, 5-6, 9-10 |
| A | | 3-4, 7-8, 11-15 |
| A | JP 2017-61603 A (FUJI XEROX CO LTD) 30 March 2017 (2017-03-30) | 1-15 |
| A | WO 2017/170940 A1 (NISSAN CHEMICAL IND LTD) 05 October 2017 (2017-10-05) | 1-15 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **28 October 2021** | **22 November 2021** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2021/033063**

| Patent document cited in search report | Publication date (day/month/year) | Patent family member(s) | Publication date (day/month/year) |
|---|---|---|---|
| JP 2000-345028 A | 12 December 2000 | (Family: none) | |
| WO 2018/066522 A1 | 12 April 2018 | TW 201827485 A | |
| JP 63-21917 A | 29 January 1988 | US 4971744 A<br>examples<br>EP 246732 A2 | |
| JP 2019-528368 A | 10 October 2019 | WO 2018/038309 A1<br>KR 10-2018-0022217 A<br>TW 201817776 A<br>CN 109689732 A | |
| JP 2017-61603 A | 30 March 2017 | US 2017/0088746 A1 | |
| WO 2017/170940 A1 | 05 October 2017 | KR 10-2018-0132746 A<br>CN 109313367 A<br>TW 201809074 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2016194025 A
- JP 2013023583 A
- JP 2017517582 T
- JP 2015511935 T
- JP 2017149796 A
- JP 2017061603 A
- JP 2017052877 A